# EUROPEAN PATENT APPLICATION

(11) **EP 4 596 354 A1**
(43) Date of publication of application: **06.08.2025**
(21) Application number: 23873062.6
(22) Date of filing: 26.09.2023
(51) Int. Cl.: B60W 50/023, B60W 50/02, B60W 50/04, B60W 50/14, B60W 60/00

(54) **SIGNAL PROCESSING DEVICE AND VEHICLE DISPLAY DEVICE COMPRISING SAME**

(30) Priority: 27.09.2022 KR 20220122192
(71) Applicant: LG Electronics Inc., Yeongdeungpo-gu Seoul 07336 (KR)
(72) Inventor: LEE, Dongkyu, Seoul 06772 (KR); KIM, Hyunkyu, Seoul 06772 (KR); PARK, Namyong, Seoul 06772 (KR); LEE, Chulhee, Seoul 06772 (KR); YOON, Taesuk, Seoul 06772 (KR)
(74) Representative: Vossius & Partner Patentanwälte Rechtsanwälte mbB
(86) International application number: PCT/KR2023/014739
(87) International publication number: WO 2024/071947

(57) **Abstract**

A signal processing device and a vehicle display apparatus including the same according to an embodiment of the present disclosure include a processor including a plurality of processor cores, and the processor is configured to execute a plurality of virtual machines on a hypervisor, and a first virtual machine among the plurality of virtual machines is configured to transmit first data to a second virtual machine based on one of heterogeneous data communication schemes, and transmit second data to an external signal processing device based on one of the heterogeneous data communication schemes. Accordingly, it is possible to transmit the data quickly and stably through various communication schemes.

## Description

### BACKGROUND

### 1. Technical Field

The present disclosure relates to a signal processing device and a vehicle display apparatus having the same, and more specifically, to a signal processing device capable of transmitting data quickly and stably through various communication schemes and a vehicle display apparatus having the same.

### 2. Description of the Related Art

A vehicle is a machine that allows a user to move in a desired direction. A typical example of the vehicle is an automobile.

Meanwhile, a signal processing device for vehicles is mounted in the vehicle for convenience of users who use the vehicle.

The signal processing device in the vehicle is configured to receive sensor data from various vehicle internal sensor devices and process the sensor data.

Meanwhile, as the type and number of sensors mounted in the vehicle increase for the Advanced Driver Assistance System (ADAS) or autonomous driving, etc., the amount of data required to be processed also increases.

Accordingly, a scheme for transmitting data quickly and stably in a signal processing device inside a vehicle is being studied.

### SUMMARY

An object of the present disclosure is to provide a signal processing device capable of transmitting data quickly and stably through various communication schemes and a vehicle display apparatus including the same.

Another object of the present disclosure is to enable data to be transmitted quickly and stably based on a safety level.

Still another object of the present disclosure is to provide a signal processing device capable of efficiently performing data processing using a microservice and a vehicle display apparatus including the same.

A signal processing device and a vehicle display apparatus including the same according to an embodiment of the present disclosure include a processor including a plurality of processor cores, wherein the processor is configured to execute a plurality of virtual machines on a hypervisor, and a first virtual machine among the plurality of virtual machines is configured to transmit first data to a second virtual machine based on one of heterogeneous data communication schemes, and transmit second data to an external signal processing device based on one of the heterogeneous data communication schemes.

Meanwhile, one of communication schemes from the first virtual machine to the second virtual machine may be the same as one of communication schemes from the first virtual machine to the external signal processing device.

Meanwhile, the signal processing device and the vehicle display apparatus including the same according to an embodiment of the present disclosure may further include an Ethernet switch for Ethernet communication; and a second switch for peripheral component interconnect express communication, wherein the first virtual machine may be configured to transmit the second data to the external signal processing device through the Ethernet communication or the peripheral component interconnect express communication.

Meanwhile, the first virtual machine may be configured to transmit the first data to the second virtual machine through a shared memory in the hypervisor or Ethernet communication.

Meanwhile, the processor may be configured to execute an operating system on the hypervisor, and a service provider in the first virtual machine may be configured to transmit the first data to a service subscriber within the first virtual machine through a shared memory in the operating system.

Meanwhile, the first virtual machine may be configured to transmit the second data to a second signal processing device or a zonal signal processing device through the Ethernet communication or the peripheral component interconnect express communication.

Meanwhile, the zonal signal processing device may be configured to convert sensor data received through CAN communication into an Ethernet signal and transmit the Ethernet signal, and the first virtual machine may be configured to receive the sensor data converted into the Ethernet signal through the Ethernet communication.

Meanwhile, the processor may be configured to transmit a video signal to a display based on one of heterogeneous data communication schemes.

Meanwhile, the processor may be configured to transmit the video signal to the display based on a low voltage differential signaling (LVDS) scheme or a Serdes scheme.

Meanwhile, the signal processing device and the vehicle display apparatus including the same according to an embodiment of the present disclosure may further include a second processor including a plurality of processor cores of a first type and a processor core of a second type different from the first type, wherein the processor may be configured to transmit third data to the second processor through inter platform communication (IPC).

Meanwhile, the first virtual machine may be configured to execute a first application with a first safety level or a second safety level higher than the first safety level or a microservice corresponding to the first application, and the second processor may be configured to execute a second application with the second safety level or a microservice corresponding to the second application.

Meanwhile, the first virtual machine may be configured to execute a first application with a first safety level or a second safety level higher than the first safety level or a microservice corresponding to the first application, and the second virtual machine may be configured to execute an application or microservice with the second safety level.

Meanwhile, the first virtual machine may be configured to receive result data of a microservice from an external zonal signal processing device through Ethernet communication, and transmit the received result data to the second virtual machine with the same or lower safety level.

Meanwhile, the processor may be configured to receive periodic sensor data or camera data from an external zonal signal processing device through Ethernet communication.

Meanwhile, the processor may be configured to transmit time synchronous control data to an external zonal signal processing device.

Meanwhile, the first virtual machine may be configured to process camera data received through Ethernet communication and transmit the processed data to the second virtual machine based on one of the heterogeneous data communication schemes.

Meanwhile, the processor may be configured to transmit an audio signal based on an automotive audio bus to an audio output device.

Meanwhile, the first virtual machine may be configured to transmit the first data to the second virtual machine with the same or lower safety level, and transmit the second data to the external signal processing device with the same or lower safety level.

Meanwhile, a signal processing device and a vehicle display apparatus including the same according to another embodiment of the present disclosure include a processor including a plurality of processor cores, wherein the processor is configured to execute a plurality of virtual machines on a hypervisor, and a first virtual machine among the plurality of virtual machines is configured to transmit first data to a second virtual machine through Ethernet communication or a shared memory within the hypervisor, and transmit second data to an external signal processing device through the Ethernet communication or peripheral component interconnect express communication.

### EFFECTS OF THE DISCLOSURE

The signal processing device and the vehicle display apparatus including the same according to an embodiment of the present disclosure include a processor including a plurality of processor cores, wherein the processor is configured to execute a plurality of virtual machines on a hypervisor, and a first virtual machine among the plurality of virtual machines is configured to transmit first data to a second virtual machine based on one of heterogeneous data communication schemes, and transmit second data to an external signal processing device based on one of the heterogeneous data communication schemes. Accordingly, it is possible to transmit the data quickly and stably through various communication schemes.

Meanwhile, one of communication schemes from the first virtual machine to the second virtual machine can be the same as one of communication schemes from the first virtual machine to the external signal processing device. Accordingly, it is possible to transmit the data quickly and stably through various communication schemes.

Meanwhile, the signal processing device and the vehicle display apparatus including the same according to an embodiment of the present disclosure can further include an Ethernet switch for Ethernet communication; and a second switch for peripheral component interconnect express communication, wherein the first virtual machine can transmit the second data to the external signal processing device through the Ethernet communication or the peripheral component interconnect express communication. Accordingly, it is possible to transmit the data quickly and stably through various communication schemes.

Meanwhile, the first virtual machine can transmit the first data to the second virtual machine through a shared memory in the hypervisor or Ethernet communication. Accordingly, it is possible to transmit the data quickly and stably through various communication schemes.

Meanwhile, the processor can execute an operating system on the hypervisor, and a service provider in the first virtual machine can transmit the first data to a service subscriber within the first virtual machine through a shared memory in the operating system. Accordingly, it is possible to transmit data to the service subscriber quickly and stably.

Meanwhile, the first virtual machine can transmit the second data to a second signal processing device or a zonal signal processing device through the Ethernet communication or the peripheral component interconnect express communication. Accordingly, it is possible to transmit the data quickly and stably through various communication schemes.

Meanwhile, the zonal signal processing device can convert sensor data received through CAN communication into an Ethernet signal and transmit the Ethernet signal, and the first virtual machine can receive the sensor data converted into the Ethernet signal through the Ethernet communication. Accordingly, it is possible to receive the sensor data quickly and stably.

Meanwhile, the processor can transmit a video signal to a display based on one of heterogeneous data communication schemes. Accordingly, it is possible to transmit the image signal quickly and stably through various communication schemes.

Meanwhile, the processor can transmit the video signal to the display based on a low voltage differential signaling (LVDS) scheme or a Serdes scheme. Accordingly, it is possible to transmit the image signal quickly and stably through various communication schemes.

Meanwhile, the signal processing device and the vehicle display apparatus including the same according to an embodiment of the present disclosure can further include a second processor including a plurality of processor cores of a first type and a processor core of a second type different from the first type, wherein the processor can transmit third data to the second processor through inter platform communication (IPC). Accordingly, it is possible transmit the third data quickly and stably.

Meanwhile, the first virtual machine can execute a first application or a microservice corresponding to the first application with the first safety level or the second safety level higher than the first safety level, and the second processor can execute a second application with the second safety level or a microservice corresponding to the second application. Accordingly, it is possible to execute the application or microservice corresponding to the safety level. Further, it is possible to perform data processing efficiently using the microservice.

Meanwhile, the first virtual machine can execute a first application with a first safety level or a second safety level higher than the first safety level or a microservice corresponding to the first application, and the second virtual machine can execute an application or microservice with the second safety level. Accordingly, it is possible to execute the application or microservice corresponding to the safety level. Further, it is possible to perform data processing efficiently using the microservice.

Meanwhile, the first virtual machine can receive result data of a microservice from an external zonal signal processing device through Ethernet communication, and transmit the received result data to the second virtual machine with the same or lower safety level. Accordingly, it is possible to transmit the data quickly and stably based on the safety level. Further, it is possible to perform data processing efficiently using the microservice.

Meanwhile, the processor can receive periodic sensor data or camera data from an external zonal signal processing device through Ethernet communication. Accordingly, it is possible to transmit the sensor data quickly and stably.

Meanwhile, the processor can transmit time synchronous control data to an external zonal signal processing device. Accordingly, it is possible to transmit the time synchronous control data quickly and stably.

Meanwhile, the first virtual machine can process camera data received through the Ethernet communication and transmit the processed data to the second virtual machine based on one of the heterogeneous data communication schemes. Accordingly, it is possible to transmit the data quickly and stably through various communication schemes.

Meanwhile, the processor can transmit an audio signal based on an automotive audio bus to an audio output device. Accordingly, it is possible to transmit an audio signal quickly and stably.

Meanwhile, the first virtual machine can transmit the first data to the second virtual machine with the same or lower safety level, and transmit the second data to the external signal processing device with the same or lower safety level. Accordingly, it is possible to transmit the data quickly and stably based on the safety level. Further, it is possible to perform data processing efficiently a using microservice.

Meanwhile, a signal processing device and a vehicle display apparatus including the same according to another embodiment of the present disclosure include a processor including a plurality of processor cores, wherein the processor is configured to execute a plurality of virtual machines on a hypervisor, and a first virtual machine among the plurality of virtual machines is configured to transmit first data to a second virtual machine through Ethernet communication or a shared memory within the hypervisor, and transmit second data to an external signal processing device through the Ethernet communication or peripheral component interconnect express communication. Accordingly, it is possible to transmit the data quickly and stably through various communication schemes.

### BRIEF DESCRIPTION OF THE DRAWINGS

FIG. 1 is a diagram illustrating an example of the exterior and interior of a vehicle;
FIGS. 2A to 2C are diagrams illustrating various architectures of a vehicle communication gateway;
FIG. 3A is a diagram illustrating an example of a vehicle display apparatus in a vehicle;
FIG. 3B is a diagram illustrating another example of a vehicle display apparatus in a vehicle;
FIG. 4 is an internal block diagram illustrating an example of the vehicle display apparatus of FIG. 3B;
FIGS. 5A to 5D are diagrams illustrating various examples of a vehicle display apparatus;
FIG. 6 is a block diagram illustrating an example of a vehicle display apparatus according to an embodiment of the present disclosure;
FIG. 7A is a diagram referred to in the description of a signal processing device associated with the present disclosure;
FIG. 7B is a diagram illustrating an example of executing microservices according to an embodiment of the present disclosure;
FIG. 8 is another example of the block diagram of the vehicle display apparatus according to the embodiment of the present disclosure;
FIG. 9 is still another example of the block diagram of the vehicle display apparatus according to the embodiment of the present disclosure;
FIG. 10 is an example of an internal block diagram of a signal processing device according to an embodiment of the present disclosure;
FIGS. 11 to 13 are various examples of block diagrams of the vehicle display apparatus according to the embodiment of the present disclosure;
FIGS. 14A to 15 are diagrams referenced in descriptions of FIGS. 11 to 13.
FIG. 16 is a flowchart showing an operation method for the signal processing device according to the embodiment of the present disclosure; and
FIGS. 17A to 24 are diagrams referenced in operation description of FIG. 16.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

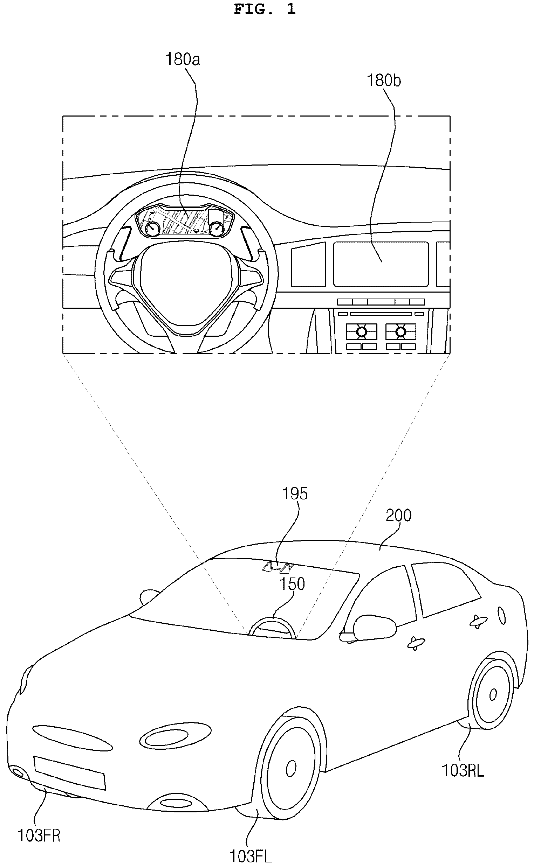

FIG. 1 is a diagram illustrating an example of the exterior and interior of a vehicle.

Referring to the figure, the vehicle 200 is moved by a plurality of wheels 103FR, 103FL, 103RL, ... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

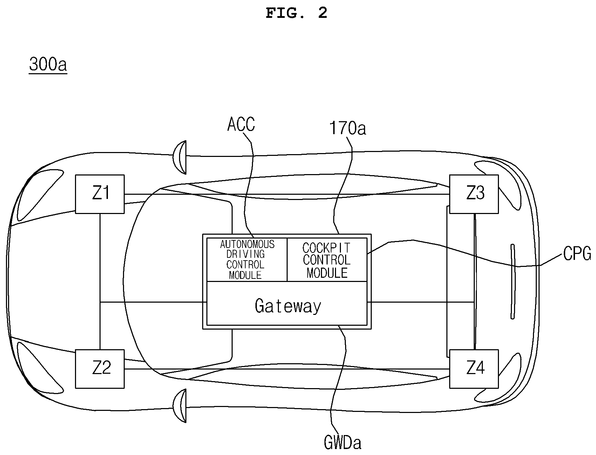

FIGS. 2 to 2C are diagrams illustrating various architectures of a vehicle communication gateway.

First, FIG. 2 is a diagram illustrating a first architecture of a vehicle communication gateway.

Referring to FIG. 2, a first architecture 300a can correspond to a zone-based architecture.

Accordingly, vehicle internal sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further include an autonomous driving control module ACC, a cockpit control module CPG, etc., in addition to the vehicle communication gateway GWDa.

The vehicle communication gateway GWDa in the signal processing device 170a can be a High Performance Computing (HPC) gateway.

That is, as an integrated HPC gateway, the signal processing device 170a of FIG. 2 can exchange data with an external communication module (not shown) or processors (not shown) in the plurality of zones Z1 to Z4.

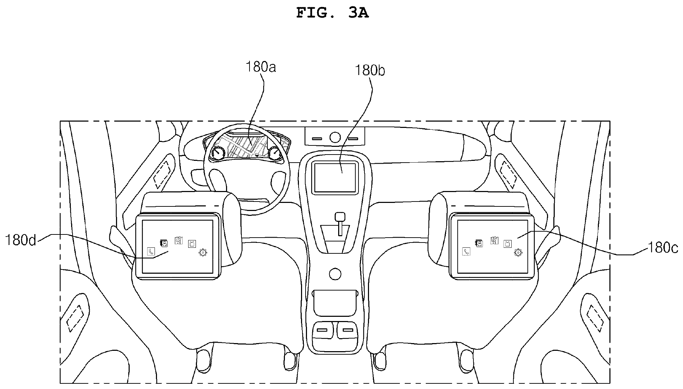

FIG. 3A is a diagram illustrating an example of a vehicle display apparatus in a vehicle.

Referring to the figure, a cluster display 180a, an audio video navigation (AVN) display 180b, rear seat entertainment displays 180c and 180d, and a rear-view mirror display (not shown) can be mounted in the vehicle.

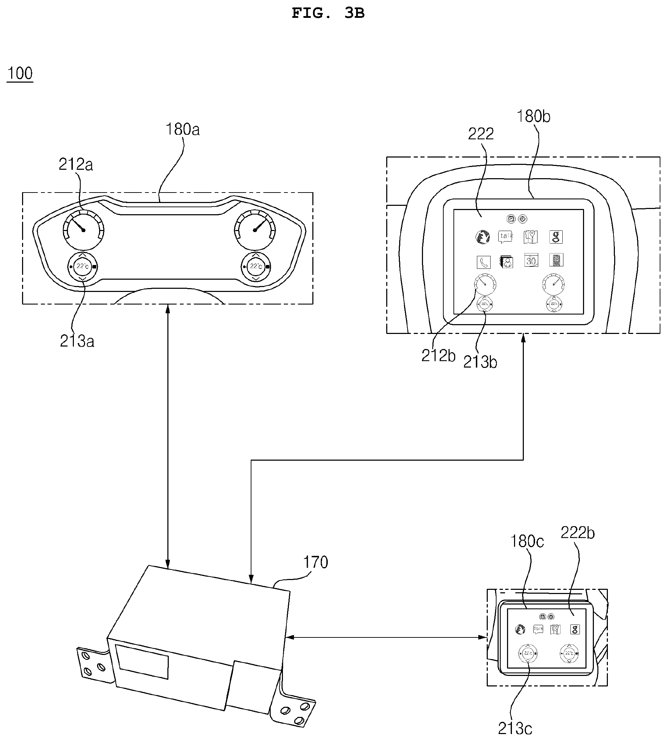

FIG. 3B is a diagram illustrating another example of a vehicle display apparatus in a vehicle.

A vehicle display apparatus 100 according to the embodiment of the present disclosure can include a plurality of displays 180a and 180b and a signal processing device 170 configured to perform signal processing in order to display images and information on the plurality of displays 180a and 180b, and to output an image signal to at least one of the displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can receive and process wheel speed sensor data of the vehicle, and can transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to the embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

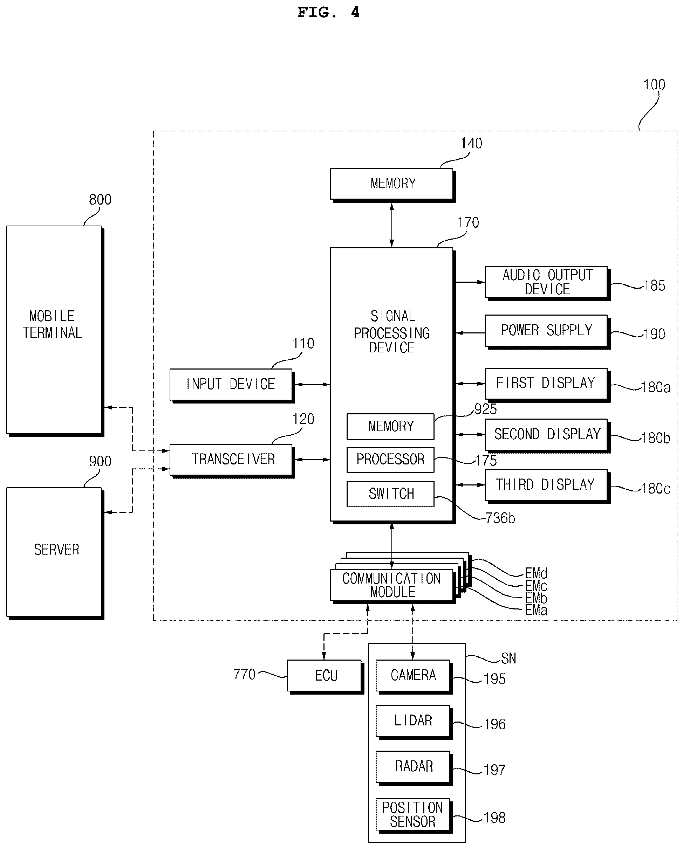

FIG. 4 is an internal block diagram illustrating an example of the vehicle display apparatus of FIG. 3B.

Referring to FIG. 4, a vehicle display apparatus 100 according to an embodiment of the present disclosure can include an input device 110, a transceiver 120 for communication with an external device, a plurality of communication modules EMa to EMd for internal communication, a memory 140, the signal processing device 170, a plurality of displays 180a to 180c, an audio output device 185, and a power supply 190.

The plurality of communication modules EMa to EMd can be disposed in a plurality of zones Z1 to Z4, respectively, in FIG. 2.

Meanwhile, the signal processing device 170 can be provided therein with a communication switch 736b for data communication with the respective communication modules EM1 to EM4.

The respective communication modules EM1 to EM4 can perform data communication with the plurality of sensor devices SN or the ECU 770.

Meanwhile, a plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic state information, such as Transport Protocol Experts Group (TPEG) information, from a mobile terminal 800 or a server 900. To this end, the transceiver 120 can include a mobile communication module (not shown).

The plurality of communication modules EM1 to EM4 can receive sensor data and the like from the electronic control unit (ECU) 770 or the sensor device SN or a zonal signal processing device 170Z, and can transmit the received sensor data to the signal processing device 170.

Here, the sensor data can include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, or vehicle internal humidity data.

The sensor data can be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module can include a GPS module configured to receive GPS information or a position sensor 198.

Meanwhile, at least one of the plurality of communication modules EM1 to EM4 can transmit position information data sensed by the GPS module or the position sensor 198 to the signal processing device 170.

Meanwhile, at least one of the plurality of communication modules EM1 to EM4 can receive front image data of the vehicle, side-of-vehicle image data, rear image data of the vehicle, and obstacle-around-vehicle distance information from the camera 195, the lidar sensor 196, or the radar sensor 197, etc., and can transmit the received information to the signal processing device 170.

The memory 140 can store various data necessary for overall operation of the vehicle display apparatus 100, such as programs for processing or control of the signal processing device 170.

For example, the memory 140 can store data about the hypervisor and first to third virtual machines executed by the hypervisor in the processor 175.

The audio output device 185 can convert an electrical signal from the signal processing device 170 into an audio signal, and can output the audio signal. To this end, the audio output device 185 can include a speaker.

The power supply 190 can supply power necessary to operate components under control of the signal processing device 170. In particular, the power supply 190 can receive power from a battery in the vehicle.

The signal processing device 170 can control the overall operation of each device in the vehicle display apparatus 100.

For example, the signal processing device 170 can include a processor 175 configured to perform signal processing for the vehicle displays 180a and 180b.

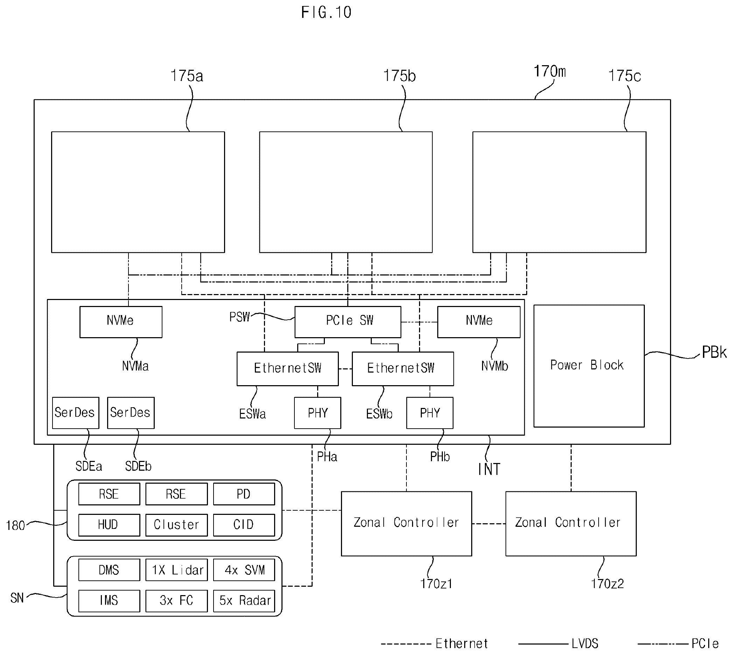

The processor 175 can execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can transmit the processed data to the second and third virtual machines (not shown).

Accordingly, only the first virtual machine (not shown), among the first to third virtual machines (not shown), can receive sensor data from the plurality of sensor devices, communication data, or external input data, and can perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

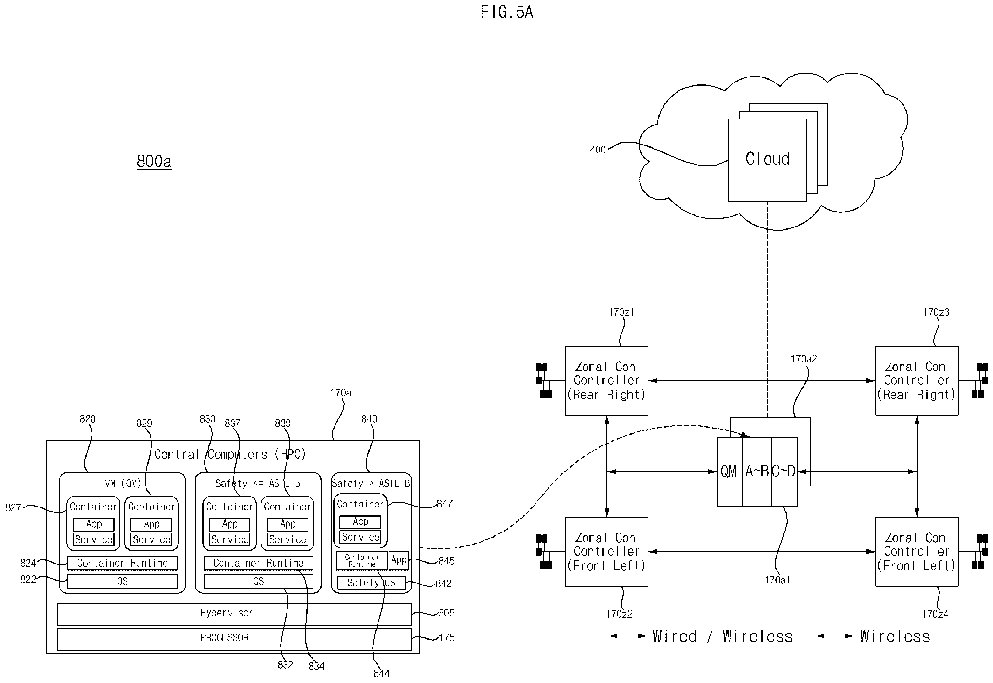

Meanwhile, the signal processing device 170 in the display apparatus 100 of FIG. 4 can be the same as signal processing devices 170, 170a1, and 170a2 of a vehicle display apparatus of FIG. 5A and subsequent figures.

FIGS. 5A to 5D are diagrams illustrating various examples of a vehicle display apparatus.

FIG. 5A is a diagram illustrating an example of a vehicle display apparatus according to an embodiment of the present disclosure.

Referring to FIG. 5A, a vehicle display apparatus 800a according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 can exchange data with the communication device 120 based on wired communication.

Meanwhile, the data received by the signal processing devices 170a1 and 170a2 can include camera data or sensor data.

For example, the vehicle internal sensor data can include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data or external vehicle lidar data.

Meanwhile, the camera data can include external vehicle camera data and vehicle internal camera data.

Meanwhile, the signal processing devices 170a1 and 170a2 can execute a plurality of virtual machines 820, 830, and 840 based on safety levels.

In the drawing, an example is illustrated in which the processor 175 in the signal processing device 170a is configured to execute the hypervisor 505, and is configured to execute first to third virtual machines 820 to 840 on the hypervisor 505 according to the Automotive Safety Integrity Level (ASIL).

The first virtual machine 820 can be a virtual machine corresponding to quality management (QM) which is the lowest risk level of the ASIL with no mandatory need.

The first virtual machine 820 can execute an operating system 822, a container runtime 824 on the operating system 822, and containers 827 and 829 on the container runtime 824.

The second virtual machine 820 can be a virtual machine corresponding to ASIL A or ASIL B with the combination of severity, exposure, and controllability values being 7 or 8.

The second virtual machine 820 can execute an operating system 832, a container runtime 834 on the operating system 832, and containers 837 and 839 on the container runtime 834.

The third virtual machine 840 can be a virtual machine corresponding to ASIL C or ASIL D with the combination of severity, exposure, and controllability values being 9 or 10.

Meanwhile, ASIL D can correspond to a grade that requires the highest level of safety.

The third virtual machine 840 can execute a safety operating system 842 and an application 845 on the operating system 842.

Meanwhile, the third virtual machine 840 can also execute the safety operating system 842, a container runtime 844 on the safety operating system 842, and a container 847 on the container runtime 844.

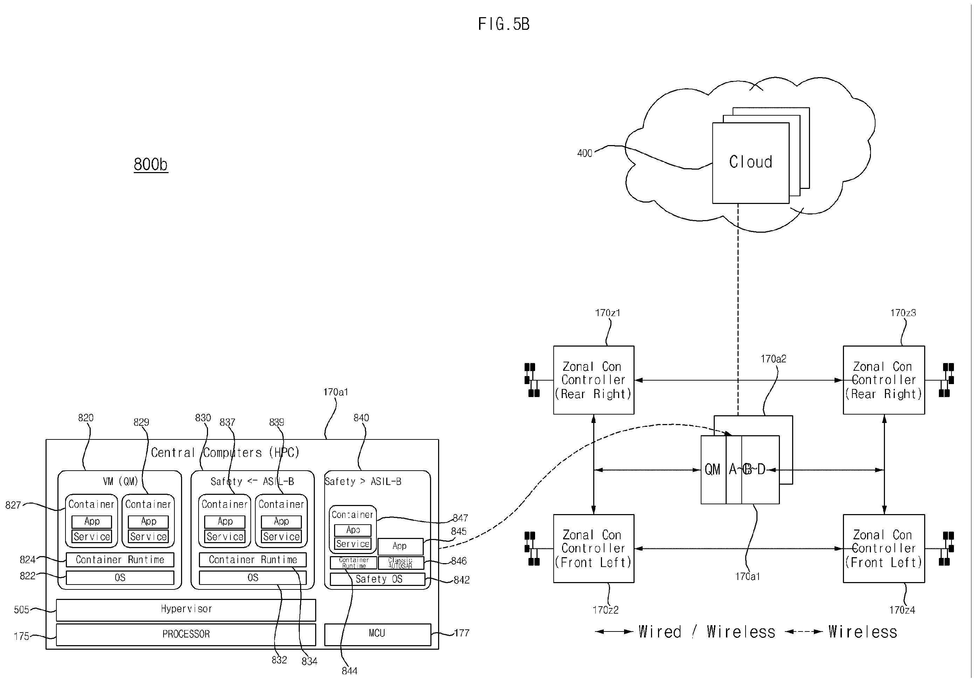

Meanwhile, unlike the drawing, the third virtual machine 840 can also be executed by a separate core, rather than by the processor 175, which will be described below with reference to FIG. 5B.

FIG. 5B is a diagram illustrating another example of a vehicle display apparatus according to an embodiment of the present disclosure.

Referring to FIG. 5B, a vehicle display apparatus 800b according to an embodiment of the present disclosure includes signal processing devices 170a1 and 170a2 and a plurality of zonal signal processing devices 170Z1 to 170Z4.

The vehicle display apparatus 800b of FIG. 5B is similar to the vehicle display apparatus 800a of FIG. 5A, with a difference being that the signal processing device 170a1 of FIG. 5B is partially different from the signal processing device 170a1 of FIG. 5A.

The following description will focus on the difference, in which the signal processing device 170a can include a processor 175 and a second processor 177.

The processor 175 in the signal processing device 170a1 is configured to execute the hypervisor 505, and is configured to execute the first and second virtual machines 820 and 830 on the hypervisor 505 according to the ASIL.

The first virtual machine 820 can execute the operating system 822, the container runtime 824 on the operating system 822, and the containers 827 and 829 on the container runtime 824.

The second virtual machine 820 can execute the operating system 832, the container runtime 834 on the operating system 832, and the containers 837 and 839 on the container runtime 834.

Meanwhile, the second processor 177 in the signal processing device 170a1 can execute the third virtual machine 840.

The third virtual machine 840 can execute the safety operating system 842, an AUTOSAR 845 on the operating system 842, and an application 845 on the AUTOSAR 845. That is, unlike FIG. 5A, the third virtual machine 840 can further execute the AUTOSAR 846 on the operating system 842.

Meanwhile, similarly to FIG. 5A, the third virtual machine 840 can also execute the safety operating system 842, the container runtime 844 on the safety operating system 842, and the container 847 on the container runtime 844.

Meanwhile, unlike the first and second virtual machines 820 and 830, the third virtual machine 840 that requires a high safety level is desirably executed by the second processor 177 that is a different core or a different processor.

Meanwhile, in the signal processing devices 170a1 and 170a2 of FIGS. 5A and 5B, if there is abnormality in the first signal processing device 170a, the second signal processing device 170a can operate which is provided for backup purposes.

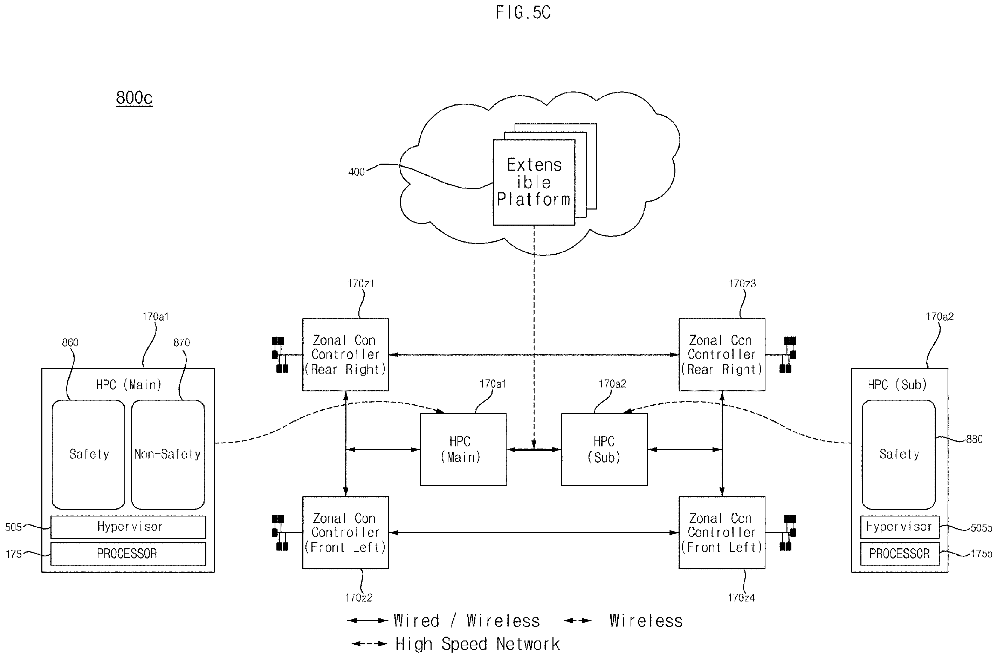

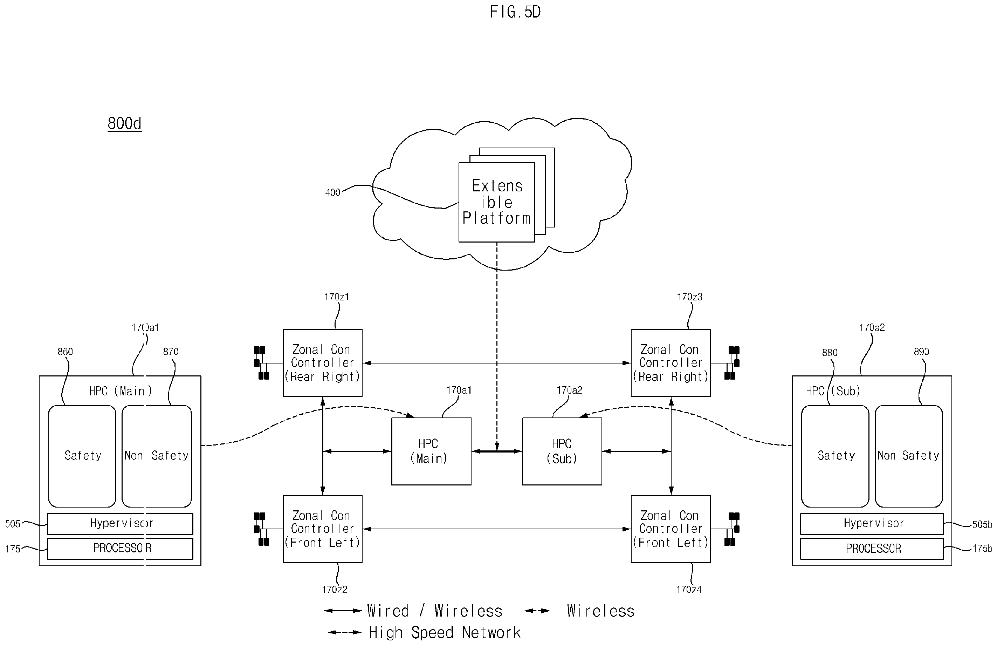

Unlike the example, the signal processing devices 170a1 and 170a2 can operate at the same time, among which the first signal processing device 170a can operate as a main device, and the second signal processing device 170a2 can operate as a sub device, which will be described below with reference to FIGS. 5C and 5D.

FIG. 5C is a diagram illustrating yet another example of a vehicle display apparatus according to an embodiment of the present disclosure.

Referring to FIG. 5C, a vehicle display apparatus 800c according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 exchange data with the communication device 120 based on wired communication.

Meanwhile, the data received by the signal processing devices 170a1 and 170a2 can include camera data or sensor data.

Meanwhile, the processor 175 in the first signal processing device 170a1 of the signal processing devices 170a1 and 170a2 can execute the hypervisor 505, and can execute each of a safety virtual machine 860 and a non-safety virtual machine 870 on the hypervisor 505.

Meanwhile, the processor 175b in the second signal processing device 170a2 of the signal processing devices 170a1 and 170a2 can execute the hypervisor 505b, and can execute only a safety virtual machine 880 on the hypervisor 505.

In the method, safety and non-safety virtual machines can be processed separately by the first signal processing device 170a1 and the second signal processing device 170a2, thereby improving stability and processing speed.

Meanwhile, high-speed network communication can be performed between the first signal processing device 170a1 and the second signal processing device 170a2.

FIG. 5D is a diagram illustrating yet another example of a vehicle display apparatus according to an embodiment of the present disclosure.

Referring to FIG. 5D, a vehicle display apparatus 800d according to an embodiment of the present disclosure includes signal processing devices 170a1 and 170a2 and a plurality of zonal signal processing devices 170Z1 to 170Z4.

The vehicle display apparatus 800d of FIG. 5D is similar to the vehicle display apparatus 800c of FIG. 5C, with a difference being that the second signal processing device 170a2 of FIG. 5D is partially different from the second signal processing device 170a2 of FIG. 5C.

The processor 175b in the second signal processing device 170a2 of FIG. 5D can execute the hypervisor 505b, and can execute each of a safety virtual machine 880 and a non-safety virtual machine 890 on the hypervisor 505.

That is, unlike FIG. 5C, there is a difference in that the processor 175b in the second signal processing device 170a2 further is configured to execute the non-safety virtual machine 890.

In the method, safety and non-safety virtual machines can be processed separately by the first signal processing device 170a1 and the second signal processing device 170a2, thereby improving stability and processing speed.

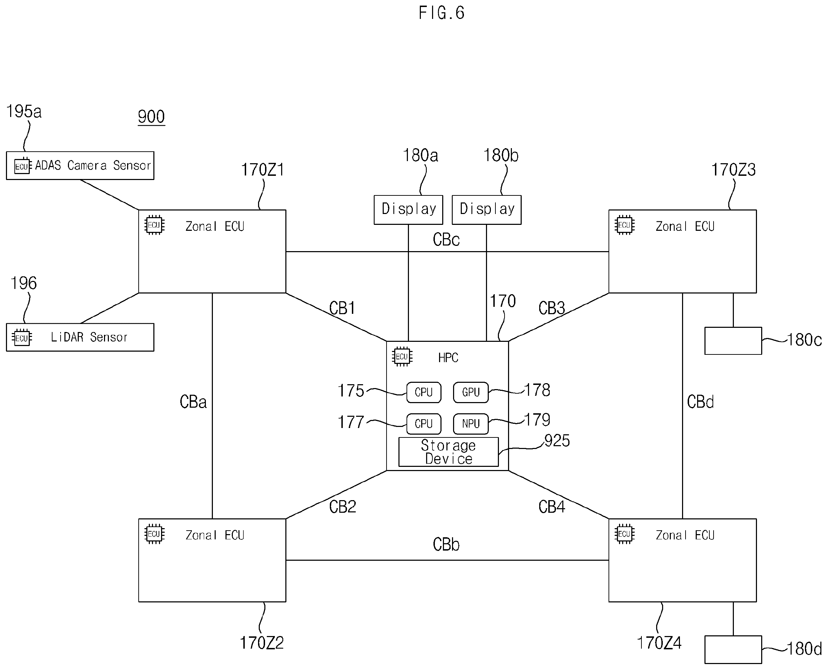

FIG. 6 is an exemplary block diagram of a vehicle display apparatus according to an embodiment of the present disclosure.

Referring to FIG. 6, a vehicle display apparatus 900 according to an embodiment of the present disclosure includes the signal processing device 170 and at least one display.

In the drawing, a cluster display 180a and an audio video navigation (AVN) display 180b are illustrated as the at least one display.

Meanwhile, the vehicle display apparatus 900 can further include the plurality of zonal signal processing devices 170Z1 to 170Z4.

In this case, the signal processing device 170 is a high-performance centralized signal processing and control device including a plurality of CPUs 175, GPUs 178, NPUs 179, etc., and can be referred to as a High Performance Computing (HPC) signal processing device or a central signal processing device.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

In this case, the wired cables CBa to CBd can include CAN communication cable or Ethernet communication cable, or PCI Express cable.

Meanwhile, the signal processing device 170 according to an embodiment of the present disclosure can include at least one processor 175, 178, and 177, and a storage device 925 having a large capacity.

For example, the signal processing device 170 according to an embodiment of the present disclosure can include central processors 175 and 177, a graphic processor 178, and a neural processor 179.

Meanwhile, sensor data can be transmitted from at least one of the plurality of zonal signal processing devices 170Z1 to 170Z4 to the signal processing device 170. Particularly, the sensor data can be stored in the storage device 925 in the signal processing device 170.

In this case, the sensor data can include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data or vehicle internal humidity data.

In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network.

To this end, the signal processing device 170 according to an embodiment of the present disclosure can perform multi path routing based on Software Defined Network (SDN). Accordingly, stable network environment for data write and read operations can be ensured. Further, data can be transmitted to the storage device 925 by using multiple paths, such that data can be transmitted by dynamically changing a network configuration.

It is desirable that data communication between the plurality of zonal signal processing devices 170Z1 to 170Z4 and the signal processing device 170 in the vehicle display apparatus 900 according to an embodiment of the present disclosure is peripheral component interconnect express communication in order to provide high band and low delay communication.

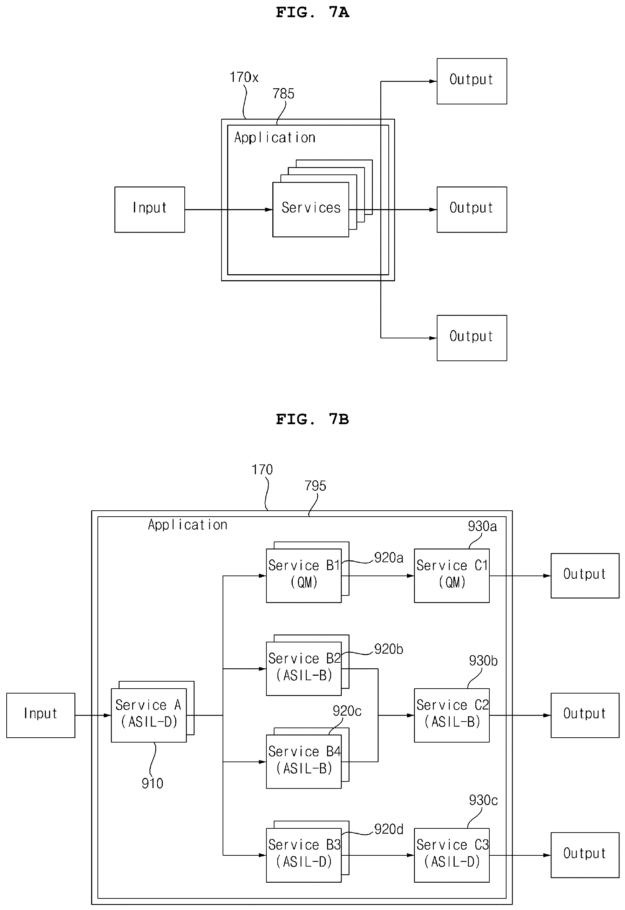

FIG. 7A is a diagram referred to in the description of a signal processing device associated with the present disclosure.

Referring to FIG. 7A, a signal processing device 170x associated with the present disclosure can execute an application 785 based on sensor data or camera data of a vehicle and the like, and can output result data through a plurality of paths.

In this method, result data of the application 785 is output only after the execution of the application 785 is complete, thereby requiring a significant amount of time and resulting in inefficiency until the execution of the application 785 is complete.

Accordingly, the present disclosure proposes a method of sharing intermediate result data and the like of an application when the application is executed.

To this end, the signal processing device 170 according to an embodiment of the present disclosure can split an application into a plurality of microservices, and can execute different microservices based on results and the like of the microservices, thereby efficiently distributing the workload.

FIG. 7B is a diagram illustrating an example of executing microservices according to an embodiment of the present disclosure.

Referring to FIG. 7B, the signal processing device 170 according to an embodiment of the present disclosure can execute an application 795 based on sensor data or camera data of a vehicle and the like.

In this case, the signal processing device 170 associated with the present disclosure can execute the application 795 by splitting the application into a plurality of microservices.

Meanwhile, the signal processing device 170 according to an embodiment of the present disclosure can execute applications or microservices by classifying the applications or microservices by safety levels.

In this case, if a sending application or microservice has a safety level higher than or equal to that of a receiving application or microservice, the signal processing device 170 according to an embodiment of the present disclosure is configured to transmit result data of the sending application or microservice.

Meanwhile, if a sending application or microservice has a lower safety level than a receiving application or microservice, the signal processing device 170 according to an embodiment of the present disclosure cannot transmit result data of the sending application or microservice.

In the drawing, an example is illustrated in which based on input data, a first microservice 910 corresponding to ASIL D which is a second safety level is executed, and result data of the first microservice 910 corresponding to ASIL D can be transmitted to each of a second microservice 920a corresponding to QM which is a third safety level, a third microservice 920b corresponding to ASIL B which is a first safety level, a fourth microservice 920c corresponding to ASIL B which is the first safety level, a fifth microservice 920d corresponding to ASIL D which is the third safety level.

The result data of the first microservice 910 can be transmitted as the safety level of the first microservice 910 is higher than the second microservice 920a, the third microservice 920b, and the fourth microservice 920c.

Meanwhile, the result data of the first microservice 910 can be transmitted as the safety level of the first microservice 910 is equal to the safety level of the fifth microservice 920d.

Then, a sixth microservice 930a, corresponding to QM which is the third safety level, is executed based on result data of the second microservice 920a, and its result data can be output through a first path.

Meanwhile, a seventh microservice 930b, corresponding to ASIL B which is the first safety level, is executed based on result data of the third microservice 920b and result data of the fourth microservice 920c, and their result data can be output through a second path.

Meanwhile, an eighth microservice 930c, corresponding to ASIL D which is the second safety level, is executed based on result data of the fifth microservice 920d, and its result data can be output through a third path.

As illustrated herein, in addition to outputting the result data of the application 795 through a plurality of paths, corresponding microservices are executed and processed through the respective paths inside the signal processing device 170 unlike FIG. 7A, such that workload can be distributed efficiently, allowing for efficient data processing.

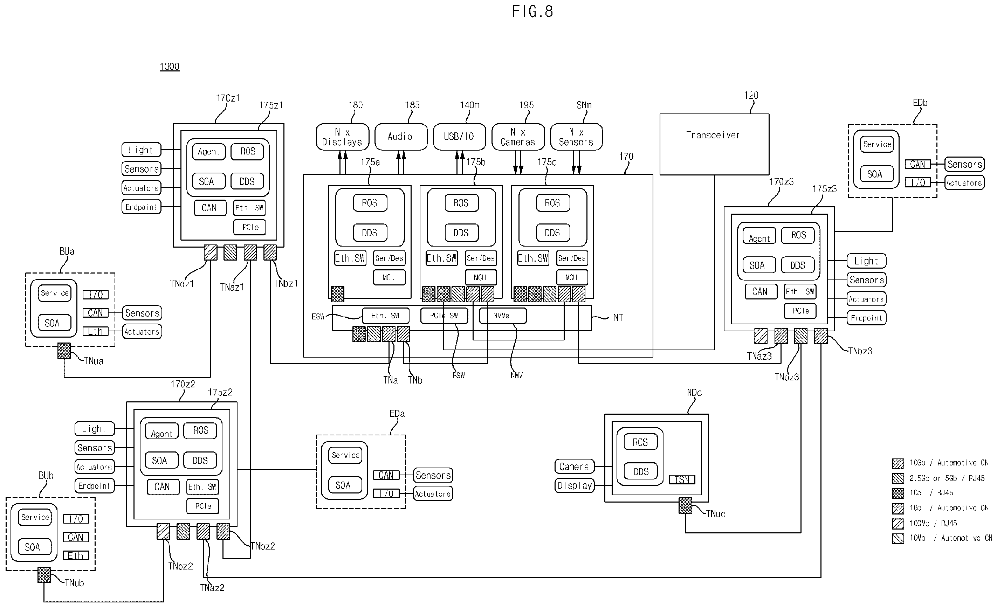

FIG. 8 illustrates another example of the block diagram of the vehicle display apparatus according to the embodiment of the present disclosure.

Referring to FIG. 8, a vehicle display apparatus 1300 including a plurality of signal processing devices includes a central signal processing device 170 and a plurality of zone-specific signal processing devices 170z1 to 170z3.

The central signal processing device 170 includes at least one processor 175a, 175b, or 175c and an interface INT for exchanging data with at least one of the plurality of zone-specific signal processing devices 170z1 to 170z3.

Meanwhile, the interface INT may include an Ethernet switch ESW for Ethernet communication, a peripheral component interconnect express (PCIe) switch PSW for PCIe communication, an nVMe interface NMV, a CAN communication interface (not shown), and the like, for data exchange with the plurality of zone-specific signal processing devices 170z1 to 170z3.

Meanwhile, at least one processor 175a, 175b, or 175c in the central signal processing device 170 according to the embodiment of the present disclosure may be configured to execute a plurality of virtual machines.

Meanwhile, a first virtual machine among the plurality of virtual machines is configured to transmit first data to a second virtual machine based on one of the heterogeneous data communication schemes, and transmit second data to at least one of the external zone-specific signal processing devices 170z1 to 170z3 based on one of the heterogeneous data communication schemes. Accordingly, it is possible to transmit the data quickly and stably through various communication schemes.

Meanwhile, one of the communication schemes from the first virtual machine to the second virtual machine may be the same as one of the communication schemes from the first virtual machine to the at least one of the zone-specific signal processing devices 170z1 to 170z3.

For example, the first virtual machine may be configured to transmit the first data to the second virtual machine 830 via the shared memory 508 in the hypervisor 505 or Ethernet communication. Accordingly, it is possible to transmit the data quickly and stably through various communication schemes.

Meanwhile, the first virtual machine may be configured to transmit the second data to the at least one of the zone-specific signal processing devices 170z1 to 170z3 through Ethernet communication or PCIe communication. Accordingly, it is possible to transmit the data quickly and stably through various communication schemes.

Meanwhile, a first terminal Tna of the central signal processing device 170 may be electrically connected to a first terminal TNbz1 of the first zonal signal processing device 170z1, and a second terminal TNaz1 of the first zonal signal processing device 170z1 may be electrically connected to a first terminal TNbz2 of a second zonal signal processing device 170z2.

Meanwhile, a second terminal TNaz2 of the second zonal signal processing device 170z2 may be electrically connected to a first terminal TNbz3 of the third zonal signal processing device 170z3, and a second terminal TNaz3 of the third zonal signal processing device 170z3 may be electrically connected to the central signal processing device 170.

Meanwhile, data exchange between the plurality of zone-specific signal processing devices 170z1 to 170z3 and the central signal processing device 170 may be performed through the Ethernet communication using the Ethernet switch ESW or the peripheral component interconnect express (PCIe) communication using the PCIe switch PSW.

Meanwhile, a second terminal Tnb of the central signal processing device 170 may be electrically connected to a second processor 175b, which is one of the internal processors 175a, 175b, and 175c.

Meanwhile, a third terminal TNoz1 of the first zonal signal processing device 170z1 may be electrically connected to a connection terminal TNua of a first basic device BUa connected to a sensor device or an actuator.

Meanwhile, a third terminal TNoz2 of the second zonal signal processing device 170z2 may be electrically connected to the connection terminal TNua of the second basic device BUa.

Meanwhile, the second zonal signal processing device 170z2 may be electrically connected to a first endpoint device EDa connected to the sensor device or the actuator through a separate terminal or the like.

Meanwhile, a third terminal TNoz3 of the third zonal signal processing device 170z3 may be electrically connected to a network display device NDC for a camera or display.

Meanwhile, the third zonal signal processing device 170z3 may be electrically connected to a second endpoint device EDb connected to the sensor device or the actuator through a separate terminal, or the like.

Meanwhile, the central signal processing device 170 may be electrically connected to the communication unit 120 for mobile communication, Wi-Fi communication, Bluetooth communication, or V2X communication, or the like.

Meanwhile, the processor 175 in the central signal processing device 170 may be configured to transmit a video signal to the display 180 based on one of the heterogeneous data communication schemes.

For example, the processor 175 in the central signal processing device 170 may be configured to transmit the video signal to the display 180 based on a low voltage differential signaling scheme or a SerDes scheme. Accordingly, it is possible to transmit the video signal quickly and stably through various communication schemes.

Meanwhile, the processor 175 in the central signal processing device 170 may be configured to transmit an audio signal based on an automotive audio bus to the audio output device 185. Accordingly, it is possible to transmit the audio signal quickly and stably.

Meanwhile, the processor 175 in the central signal processing device 170 may exchange data with the memory 140 such as a USB device, based on one of the heterogeneous data communication schemes. Accordingly, it is possible to exchange data with the memory 140 quickly and stably.

For example, the processor 175 in the central signal processing device 170 may exchange data with the memory 140 such as a USB device based on one of an inter-integrated circuit (I2C) communication scheme, a serial peripheral interface (SPI) communication scheme, or a general purpose input output (GPIO) communication scheme.

Meanwhile, the processor 175 in the central signal processing device 170 may be configured to receive camera data from the camera device 195 based on one of the heterogeneous data communication schemes. Accordingly, it is possible to receive the camera data quickly and stably.

For example, the processor 175 in the central signal processing device 170 may be configured to receive the camera data from the camera device 195 based on one of the SerDes scheme or the Ethernet communication.

Meanwhile, the processor 175 in the central signal processing device 170 may be configured to receive the sensor data from a sensor device SNm based on one of the heterogeneous data communication schemes. Accordingly, it is possible to receive the sensor data quickly and stably.

For example, the processor 175 in the central signal processing device 170 may be configured to receive the sensor data from the sensor device SNm based on one of the SerDes scheme and the Ethernet communication or CAN communication scheme.

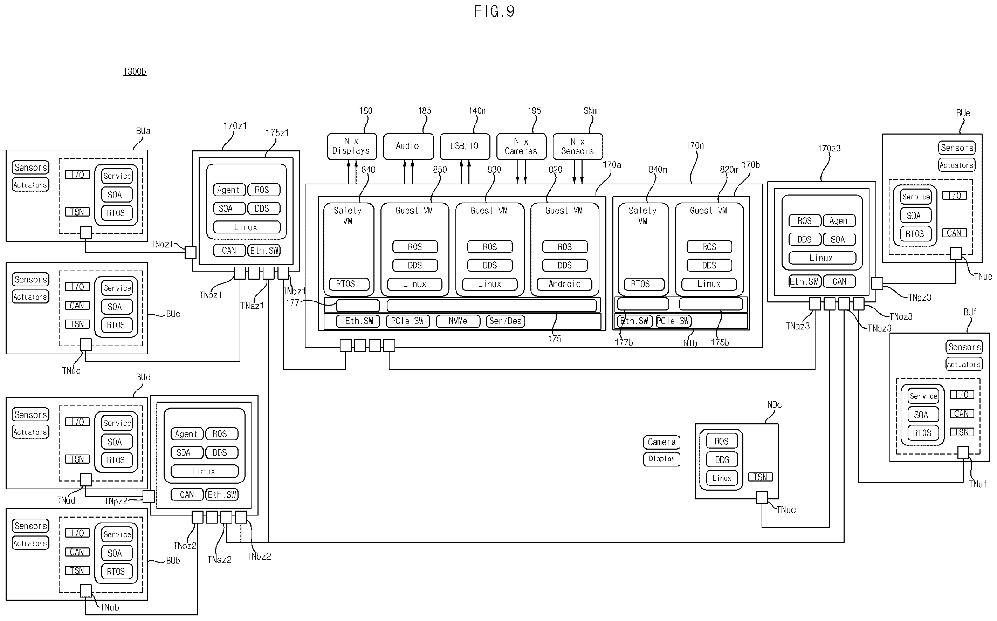

FIG. 9 illustrates another example of the block diagram of the vehicle display apparatus according to the embodiment of the present disclosure.

Referring to FIG. 9, a vehicle display apparatus 1300b according to the embodiment of the present disclosure is similar to the vehicle display apparatus 1300 of FIG. 8, but differs from the vehicle display apparatus 1300 in that the first endpoint device EDa and the second endpoint device EDb are omitted, and a first central signal processing device 170a, a second central signal processing device 170b, a third base device BUc, a fourth base device BUd, and a fifth base device BUe are further included.

The vehicle display apparatus 1300b according to the embodiment of the present disclosure includes the first central signal processing device 170a, the second central signal processing device 170b, and the plurality of zone-specific signal processing devices 170z1 to 170z3.

Meanwhile, the first central signal processing device 170a includes a processor 175 including a plurality of processor cores of a first type and an interface INT for exchanging data with at least one of the plurality of zone-specific signal processing devices 170z1 to 170z3.

Meanwhile, the interface INT may include an Ethernet switch ESW for Ethernet communication, a peripheral component interconnect express (PCIe) switch PSW for PCIe communication, an nVMe interface NMV, a CAN communication interface (not shown), and the like, for data exchange with the plurality of zone-specific signal processing devices 170z1 to 170z3.

Meanwhile, the first central signal processing device 170a may further include the second processor 177 having a second type of processor core.

The first type of processor core may be an application processor core, and the second type of processor core may be an M core.

Meanwhile, the second central signal processing device 170b may include a processor 175b including a plurality of processor cores of the first type, and an interface INTb for exchanging data with at least one of the plurality of zone-specific signal processing devices 170z1 to 170z3.

Meanwhile, the interface INTb may include an Ethernet switch ESWb for Ethernet communication, a PCIe switch PSWb for PCIe communication, and the like, for data exchange with the plurality of zone-specific signal processing devices 170z1 to 170z3.

Meanwhile, the second central signal processing device 170b may further include a second processor 177b including a second type of processor core.

Meanwhile, the processor 175 in the first central signal processing device 170a may be configured to execute a plurality of virtual machines 820 to 850.

Meanwhile, among the plurality of virtual machines 820 to 850 within the first central signal processing device 170a, a first virtual machine is configured to transmit the first data to the second virtual machine based on one of the heterogeneous data communication schemes, and transmit the second data to at least one of the external zone-specific signal processing devices 170z1 to 170z4 based on one of the heterogeneous data communication schemes. Accordingly, it is possible to transmit the data quickly and stably through various communication schemes.

Meanwhile, one of the communication schemes from the first virtual machine to the second virtual machine in the first central signal processing device 170a may be the same as one of the communication schemes from the first virtual machine to at least one of the zone-specific signal processing devices 170z1 to 170z3.

For example, the first virtual machine in the first central signal processing device 170a may be configured to transmit the first data to the second virtual machine 830 via the shared memory 508 in the hypervisor 505 or through Ethernet communication. Accordingly, it is possible to transmit the data quickly and stably through various communication schemes.

Meanwhile, the first virtual machine in the first central signal processing device 170a may be configured to transmit the second data to at least one of the zone-specific signal processing devices 170z1 to 170z3 through Ethernet communication or PCIe communication. Accordingly, it is possible to transmit the data quickly and stably through various communication schemes.

Meanwhile, the processor 175b in the second central signal processing device 170b may be configured to execute a plurality of virtual machines 820m and 840m.

Meanwhile, one of the plurality of virtual machines 820m and 840m in the second central signal processing device 170b is configured to transmit third data to another virtual machine based on one of the heterogeneous data communication schemes, and transmit fourth data to at least one of the external zone-specific signal processing devices 170z1 to 170z3 based on one of the heterogeneous data communication schemes. Accordingly, it is possible to transmit the data quickly and stably through various communication schemes.

Meanwhile, a first terminal Tna of the first central signal processing device 170a may be electrically connected to the first terminal TNbz1 of the first zonal signal processing device 170z1, and the second terminal TNaz1 of the first zonal signal processing device 170z1 may be electrically connected to the first terminal TNbz2 of the second zonal signal processing device 170z2.

Meanwhile, the second terminal TNaz2 of the second zonal signal processing device 170z2 may be electrically connected to the first terminal TNbz3 of the third zonal signal processing device 170z3, and the second terminal TNaz3 of the third zonal signal processing device 170z3 may be electrically connected to the central signal processing device 170.

Meanwhile, data exchange between the plurality of zone-specific signal processing devices 170z1 to 170z3 and the first central signal processing device 170a or the second central signal processing device 170b may be performed through the Ethernet communication using the Ethernet switch ESW or the peripheral component interconnect express (PCIe) communication using the PCIe switch PSW.

Meanwhile, a second terminal Tnb of the first central signal processing device 170a may be electrically connected to the second processor 175b, which is one of the internal processors 175a, 175b, and 175c.

Meanwhile, the third terminal TNoz1 of the first zonal signal processing device 170z1 may be electrically connected to the connection terminal TNua of the first basic device BUa connected to the sensor device or the actuator.

Meanwhile, a fourth terminal TNpz1 of the first zonal signal processing device 170z1 may be electrically connected to a connection terminal TNuc of the third base device BUc connected to the sensor device or the actuator.

Meanwhile, the third terminal TNoz2 of the second zonal signal processing device 170z2 may be electrically connected to a connection terminal TNub of the second base device BUb connected to the sensor device or the actuator.

Meanwhile, a fourth terminal TNpz2 of the second zonal signal processing device 170z2 may be electrically connected to a connection terminal TNud of the fourth base device BUd connected to the sensor device or the actuator.

Meanwhile, the third terminal TNoz3 of the third zonal signal processing device 170z3 may be electrically connected to the network display device NDC for a camera or a display.

Meanwhile, a third terminal TNpz3 of the third zonal signal processing device 170z3 may be electrically connected to a connection terminal TNue of the fifth basic device BUe connected to the sensor device or the actuator.

Meanwhile, a fourth terminal TNoz3 of the second zonal signal processing device 170z2 may be electrically connected to a connection terminal TNuf of a sixth basic device BUf connected to the sensor device or the actuator.

FIG. 10 illustrates an example of an internal block diagram of the signal processing device according to the embodiment of the present disclosure.

Referring to FIG. 10, a signal processing device 170m according to an embodiment of the present disclosure includes a plurality of processors 175a, 175b, and 175c, and an interface INT for exchanging data with at least one of the plurality of zone-specific signal processing devices 170z1 to 170z2.

Meanwhile, the signal processing device 170m according to an embodiment of the present disclosure may further include a power block PBK for power supply.

The interface INT may include Ethernet switches ESWa and ESWb, a PCIe switch PSW, nVMe interfaces NMVa and NMVb, and network physical layer interfaces Pha and PHb.

Meanwhile, the interface INT may exchange data with the display 180 or the sensor device SN in addition to the plurality of zone-specific signal processing devices 170z1 to 170z2.

In this case, the display 180 may include a cluster display, a CID display, a passenger seat (PD) display, an RSE display, or a HUD display.

Meanwhile, the processor 175 in the signal processing device 170m may be configured to transmit a video signal to the display 180 based on one of the heterogeneous data communication schemes.

For example, the processor 175 in the signal processing device 170m may be configured to transmit the video signal to the display 180 based on a low voltage differential signaling (LTS) scheme or an Ethernet communication scheme. Accordingly, it is possible to transmit the image signal quickly and stably through various communication schemes.

Meanwhile, the sensor device SN may include an internal vehicle camera (DMS camera), an external vehicle camera, a lidar, or a radar.

Meanwhile, the processor 175 in the signal processing device 170m may be configured to receive the sensor data from the sensor device SN based on one of the heterogeneous data communication schemes.

For example, the processor 175 in the signal processing device 170m may be configured to receive the sensor data from the sensor device SN based on the low voltage differential signaling (LTS) scheme or the Ethernet communication scheme. Accordingly, it is possible to receive the sensor data quickly and stably through various communication schemes.

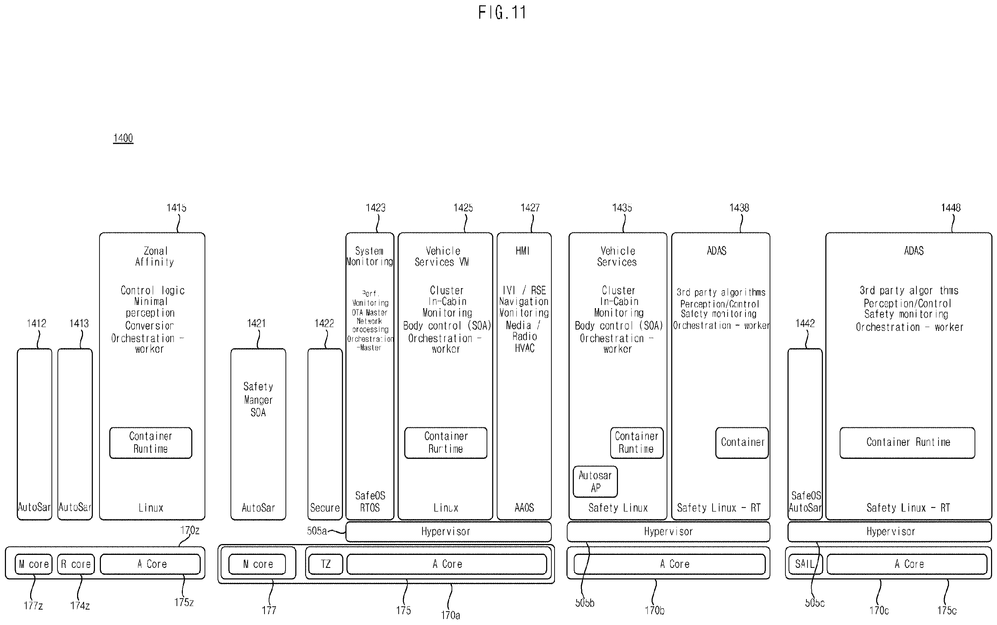

FIGS. 11 to 13 are various examples of the block diagram of the vehicle display apparatus according to the embodiment.

FIG. 11 illustrates an example of a block diagram of the vehicle display apparatus according to the embodiment of the present disclosure.

Referring to FIG. 11, a vehicle display apparatus 1400 according to an embodiment of the present disclosure may include a first central signal processing device 170a, a second central signal processing device 170b, a third central signal processing device 170c, and a zonal signal processing device 170z.

Meanwhile, the first central signal processing device 170a may include a processor 175 including a plurality of processor cores, and the second processor 177 including an M core.

Meanwhile, the processor 175 may be configured to execute the hypervisor 505a on a plurality of application cores, and execute the plurality of virtual machines 1423, 1425, and 1427 on the hypervisor 505a.

Meanwhile, among the plurality of virtual machines 1423, 1425, and 1427, the first virtual machine 1423 may be executed on the safety operating system and may be configured to execute system monitoring.

Meanwhile, among the plurality of virtual machines 1423, 1425, and 1427, the second virtual machine 1425 may be executed on a Linux operating system and may operate as a vehicle service virtual machine.

Meanwhile, the second virtual machine 1425 may be configured to execute a container runtime.

Meanwhile, among the plurality of virtual machines 1423, 1425, and 1427, the third virtual machine 1427 may be executed on an operating system and may be configured to execute an HMI service.

Meanwhile, some cores of the processor 175 may be configured to execute a virtual machine 1422 for a secure service without executing the hypervisor 505a.

Meanwhile, the second processor 177 may be configured to execute a virtual machine 1421 for a safety manager without executing the hypervisor 505a on the M core.

Meanwhile, the second central signal processing device 170b may include a processor 175b including a plurality of processor cores.

Meanwhile, the processor 175b in the second central signal processing device 170b may be configured to execute the hypervisor 505b and execute a plurality of virtual machines 1435 and 1438 on the hypervisor 505b.

Meanwhile, among the plurality of virtual machines 1435 and 1438, some virtual machines 1435 may be executed on the safety operating system and may operate as vehicle service virtual machines.

The virtual machine 1435 among the plurality of virtual machines 1435 and 1438 may be configured to execute a container runtime or the like.

Meanwhile, the virtual machine 1438 among the plurality of virtual machines 1435 and 1438 may be executed on a safety Linux operating system and may operate as a virtual machine for an advanced driver assistance system (ADAS).

Meanwhile, the virtual machine 1438 among the plurality of virtual machines 1435 and 1438 may be configured to execute a container, or the like.

Meanwhile, the third central signal processing device 170c may include a processor 175c including a plurality of processor cores.

Meanwhile, the processor 175c in the third central signal processing device 170c may be configured to execute the hypervisor 505c and execute a plurality of virtual machines 1442 and 1448 on the hypervisor 505c.

Meanwhile, the virtual machines 1435 among the plurality of virtual machines 1442 and 1448 may be executed on the safety operating system.

Meanwhile, the virtual machines 1438 among the plurality of virtual machines 1442 and 1448 may be executed on the safety Linux operating system and may operate as a virtual machine for an advanced driver assistance system (ADAS).

Meanwhile, the virtual machines 1438 among the plurality of virtual machines 1442 and 1448 may be configured to execute a container runtime, or the like.

Meanwhile, the zonal signal processing device 170z may include a processor 175z including a plurality of processor cores and a processor 177z including an M core.

Meanwhile, the zonal signal processing device 170z may be configured to execute a plurality of virtual machines 1412, 1413, and 1415.

Meanwhile, the virtual machine 1412 among the plurality of virtual machines 1412, 1413, and 1414 may be executed on the M core, the other virtual machine 1413 may be executed on the R core, and the virtual machines 1414 may be executed on the application core.

Meanwhile, the virtual machine 1414 among the plurality of virtual machines 1412, 1413, and 1414 may be configured to execute container runtime, or the like.

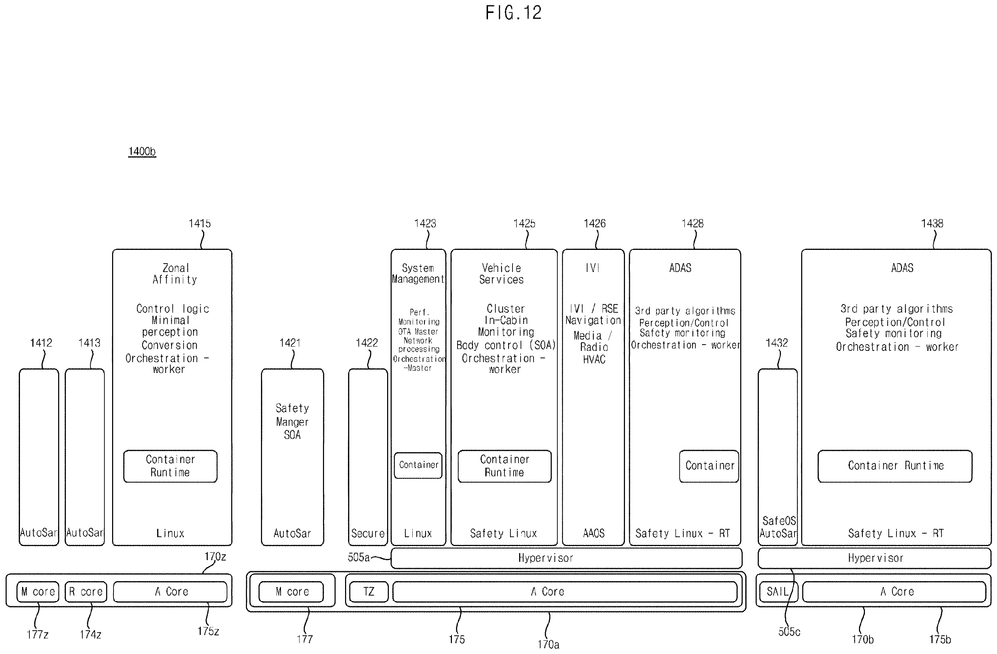

FIG. 12 illustrates another example of the block diagram of the vehicle display apparatus according to the embodiment of the present disclosure.

Referring to FIG. 12, a vehicle display apparatus 1400b according to an embodiment of the present disclosure may include the first central signal processing device 170a, the second central signal processing device 170b, and the zonal signal processing device 170z.

Meanwhile, the first central signal processing device 170a may include the processor 175 including a plurality of processor cores and the second processor 177 including an M core.

Meanwhile, the processor 175 may be configured to execute the hypervisor 505a on the plurality of application cores and execute a plurality of virtual machines 1423, 1425, 1426, and 1428 on the hypervisor 505a.

Meanwhile, among the plurality of virtual machines 1423, 1425, 1426, and 1428, the first virtual machine 1423 may be executed on a Linux operating system and may be configured to execute system monitoring.

Meanwhile, the first virtual machine 1423 may be configured to execute a container, or the like.

Meanwhile, among the plurality of virtual machines 1423, 1425, 1426, and 1428, the second virtual machine 1425 may be executed on a Safety Linux operating system and may operate as a vehicle service virtual machine.

Meanwhile, the second virtual machine 1425 may be configured to execute a container runtime.

Meanwhile, among the plurality of virtual machines 1423, 1425, 1426, and 1428, the third virtual machine 1426 may be executed on an operating system and may be configured to execute an IVI service.

Meanwhile, among the plurality of virtual machines 1423, 1425, 1426, and 1428, the fourth virtual machine 1428 may be executed on a Safety Linux operating system and may operate as a virtual machine for an advanced driver assistance system (ADAS).

Meanwhile, some of the cores of the processor 175 may be configured to execute the virtual machine 1422 for a secure service without executing the hypervisor 505a.

Meanwhile, the second processor 177 may be configured to execute the virtual machine 1421 for a safety manager without executing the hypervisor 505a on the M core.

Meanwhile, the second central signal processing device 170b may include the processor 175b including a plurality of processor cores.

Meanwhile, the processor 175b in the second central signal processing device 170b may be configured to execute the hypervisor 505b and execute a plurality of virtual machines 1432 and 1438 on the hypervisor 505b.

Meanwhile, the virtual machine 1432 among the plurality of virtual machines 1432 and 1438 may be executed on a safety operating system.

Meanwhile, the virtual machine 1438 among the plurality of virtual machines 1432 and 1438 may be executed on a safety Linux operating system and may operate as a virtual machine for an advanced driver assistance system (ADAS).

Meanwhile, the virtual machine 1438 among the plurality of virtual machines 1432 and 1438 may be executed on a container runtime, or the like.

Meanwhile, the zonal signal processing device 170z may be the same as that of FIG. 11.

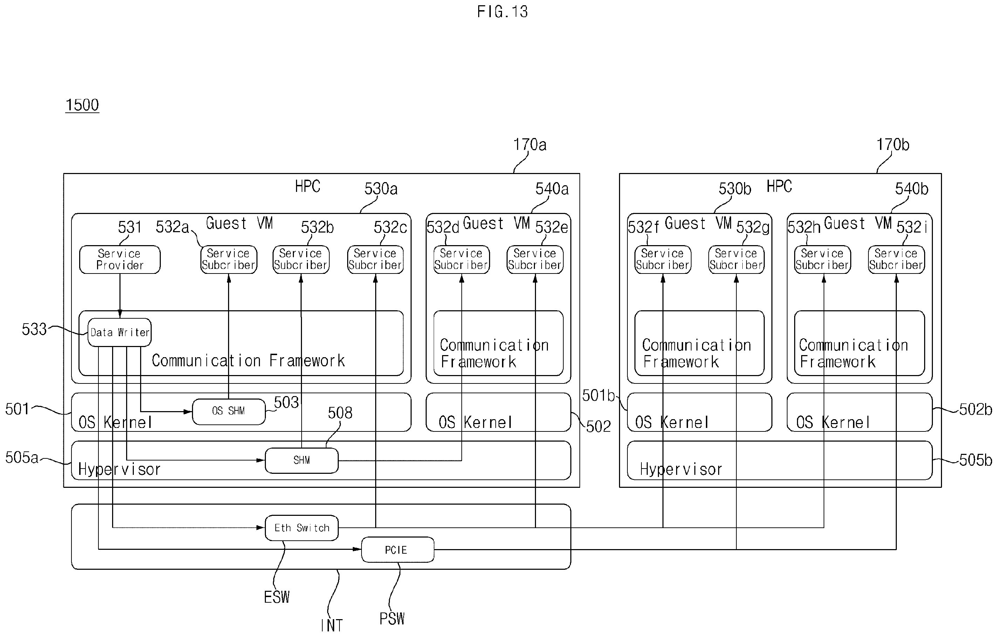

FIG. 13 illustrates another example of the block diagram of the vehicle display apparatus according to the embodiment of the present disclosure.

Referring to FIG. 13, a vehicle display apparatus 1500 according to the embodiment of the present disclosure may include the first central signal processing device 170a and the second central signal processing device 170b.

Meanwhile, the vehicle display apparatus 1500 according to the embodiment of the present disclosure may further include the interface INT.

Meanwhile, the interface INT may include an Ethernet switch ESW for Ethernet communication, and a peripheral component interconnect express (PCIe) switch PSW for PCIe communication, for data exchange with the plurality of zone-specific signal processing devices 170z1 to 170z3.

The first central signal processing device 170a includes a processor 175 includes a plurality of processor cores.

Meanwhile, the first central signal processing device 170a is configured to execute the hypervisor 505 and is configured to execute a plurality of virtual machines 530a and 540a on the hypervisor 505.

In FIG. 13, an example in which a first operating system 501 is executed on the hypervisor 505, a first virtual machine 530a is executed on the first operating system 501, a second operating system 502 is executed on the hypervisor 505, and tha second virtual machine 540a is executed on the second operating system 502 is illustrated.

Meanwhile, the first operating system 501 may be configured to execute or include an internal operating system shared memory 503.

Meanwhile, the first virtual machine 530a may be configured to execute, for example, a communication framework 533 and execute a service provider 531, service subscribers 532a, 532b, and 532c.

Meanwhile, the second virtual machine 540a may be configured to execute, for example, a communication framework and execute service subscribers 532d and 532e.

Meanwhile, the second central signal processing device 170b is configured to execute the hypervisor 505b and is configured to execute the plurality of virtual machines 530a and 540a on the hypervisor 505b.

In the drawing, a third operating system 501b is executed on the hypervisor 505b, the virtual machine 530b is executed on the third operating system 501b, a fourth operating system 502b is executed on the hypervisor 505b, and the other virtual machine 540b is executed on the fourth operating system 502b.

Meanwhile, the virtual machine 530b may be configured to execute a communication framework and execute, for example, service subscribers 532f and 532g.

Meanwhile, the other virtual machine 540b may be configured to execute a communication framework and execute, for example, service subscribers 532h and 532i.

Meanwhile, the first virtual machine 530a in the first central signal processing device 170a is configured to transmit the first data to the second virtual machine 540a based on one of the heterogeneous data communication schemes, and transmit the second data to the signal processing device 170b or 170z based on one of the heterogeneous data communication schemes. Accordingly, it is possible to transmit the data quickly and stably through various communication schemes.

Meanwhile, one of the communication schemes from the first virtual machine 530a to the second virtual machine 540a in the first central signal processing device 170a may be the same as one of communication schemes from the first virtual machine 530a to another signal processing device 170b or 170z.

For example, the first virtual machine 530a in the first central signal processing device 170a may be configured to transmit the second data to the second central signal processing device 170b or the zonal signal processing device 170z through the Ethernet communication using the Ethernet switch ESW or the peripheral component interconnect express (PCIe) communication using the PCIe switch PSW. Accordingly, it is possible to transmit the data quickly and stably through various communication schemes.

In particular, the first virtual machine 530a in the first central signal processing device 170a may be configured to transmit the second data to the virtual machines 530b and 540b in the second central signal processing device 170b through the Ethernet communication using the Ethernet switch ESW or the peripheral component interconnect express (PCIe) communication using the PCIe switch **PSW.** Accordingly, it is possible to transmit the data quickly and stably through various communication schemes.

Meanwhile, the first virtual machine 530a in the first central signal processing device 170a may be configured to transmit the first data to the second virtual machine 540a via the shared memory 508 in the hypervisor 505 or through the Ethernet communication. Accordingly, it is possible to transmit the data quickly and stably through various communication schemes.

Meanwhile, the service provider 531 in the first virtual machine 530a in the first central signal processing device 170a may be configured to transmit the first data to the service subscriber 532a in the first virtual machine 850 via the shared memory 503 in the operating system 501 or the shared memory 508 in the hypervisor 505. Accordingly, it is possible to transmit data to the service subscriber quickly and stably.

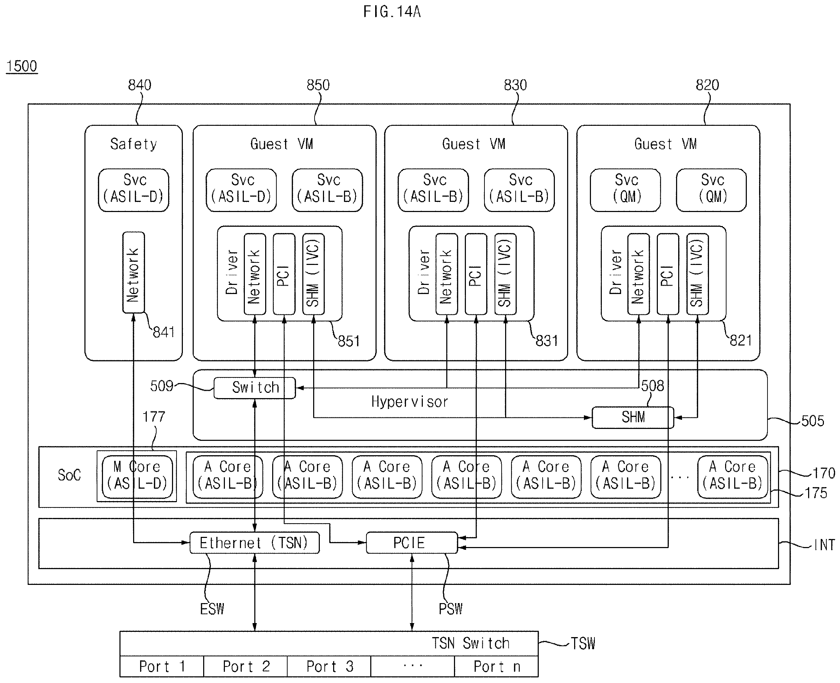

FIGS. 14A to 15 are diagrams referred to in the descriptions of FIGS. 11 to 13.

FIG. 14A is a drawing illustrating communication between the signal processing device 170 and the external switch TSW.

Referring to the drawing, the signal processing device 170 may include a plurality of processor cores CR1 to CRn and MR and an interface INT.

Meanwhile, the Ethernet communication via the Ethernet switch ESW or the PCIe communication via the PCIe switch PSW may be performed between the signal processing device 170 and the external switch TSW.

The first processor 175 in the signal processing device 170 may include a first type of processor core CR1 to CRn among the plurality of processor cores, and the second processor 177 may include a second type of processor core MR among the plurality of processor cores.

Meanwhile, any one of the heterogeneous communication schemes may be performed between the M core MR and the application processor cores CR1 to CRn among the plurality of processor cores CR1 to CRn and MR.

For example, one of IPC communication and Ethernet communication based on an internal system bus may be performed between the M core MR and the application processor cores CR1 to CRn among the plurality of processor cores CR1 to CRn and MR.

Meanwhile, one of the heterogeneous communication schemes may be performed between the plurality of virtual machines 820 to 850.

For example, one of communication using the shared memory 508 or the switch 509 within the hypervisor 505 and the Ethernet communication may be performed between the plurality of virtual machines 820 to 850.

Meanwhile, the processor 175 in the signal processing device 170 may be configured to execute the first virtual machine 850, the second virtual machine 830, and the third virtual machine 820 on the hypervisor 505.

Meanwhile, the second processor 177 in the signal processing device 170 may be configured to execute the fourth virtual machine 840 without executing the hypervisor 505.

For example, the first virtual machine 850 may be configured to execute an application or microservice corresponding to the first safety level such as ASIL B, or an application or microservice corresponding to the second safety level such as ASIL D.

For example, the second virtual machine 830 may be configured to execute the application or microservice corresponding to the first safety level such as ASIL B.

For example, the third virtual machine 820 may be configured to execute an application or microservice corresponding to the third safety level such as QM.

For example, the fourth virtual machine 840 may be configured to execute an application or microservice corresponding to the second safety level such as ASIL D.

Meanwhile, the second safety level may be higher than the first safety level, and the third safety level may be lower than the first safety level.

Meanwhile, the respective virtual machines 820 to 850 may include network interfaces or drivers 821, 831, 841, and 851, and may perform Ethernet communication with the external switch TSW via the Ethernet switch ESW in the interface INT or perform PCIe communication via the PCIe switch PSW in the interface INT.

Meanwhile, the processor 175 may be configured to transmit the third data to the second processor 177 based on inter platform communication (IPC). Accordingly, it is possible to transmit the third data quickly and stably.

Meanwhile, the first virtual machine 850 may be configured to execute a first application with the first safety level or the second safety level higher than the first safety level, or a microservice corresponding to the first application, and the second processor 177 may be configured to execute a second application with the second safety level or a microservice corresponding to the second application.

Meanwhile, the first virtual machine 850 may be configured to execute the first application with the first safety level or the second safety level higher than the first safety level or a microservice corresponding to the first application, and the second virtual machine 830 may be configured to execute the application or the microservice corresponding to the second safety level.

In this case, the first virtual machine 850 may be configured to transmit the first data to the second virtual machine 830 with a safety level lower than that of the first virtual machine 850 via the shared memory 508 in the hypervisor 505 or through Ethernet communication. Accordingly, it is possible to transmit the data quickly and stably through various communication schemes.

Meanwhile, the first virtual machine 850 does not transmit the first data to the second virtual machine 830 corresponding to a safety level higher than that of the first virtual machine 850. Accordingly, it is possible to perform data transmission selectively according to the safety level.

Meanwhile, the zonal signal processing device 170z of FIGS. 11 to 13 may be configured to convert the sensor data received through the CAN communication into an Ethernet signal and transmit the Ethernet signal.

Meanwhile, the first virtual machine 850 may be configured to receive the sensor data converted into an Ethernet signal through the Ethernet communication. Accordingly, it is possible to receive the sensor data quickly and stably.

Meanwhile, the first virtual machine 850 may be configured to receive the result data of the microservice from the external zonal signal processing device 170z through the Ethernet communication, and transmit the received result data to the second virtual machine 830 with the same or lower safety level.

Accordingly, it is possible to transmit the data quickly and stably based on the safety level. This also makes it is possible to perform data processing efficiently using microservices.

Meanwhile, the processor 175 may be configured to receive periodic sensor data or camera data from the external zonal signal processing device 170z through the Ethernet communication. Accordingly, it is possible to transmit the sensor data quickly and stably.

Meanwhile, the processor 175 may be configured to transmit time synchronous control data to the external zonal signal processing device 170z. Accordingly, it is possible to transmit the time synchronous control data quickly and stably.

Meanwhile, the first virtual machine 850 may be configured to process the camera data received through the Ethernet communication and transmit the processed data to the second virtual machine 830 based on one of the heterogeneous data communication schemes. Accordingly, it is possible to transmit the data quickly and stably through various communication schemes.

Meanwhile, the first virtual machine 850 may be configured to transmit the first data to the second virtual machine 830 with the same or lower safety level and transmit the second data to another signal processing device 170b or 170z with the same or lower safety level. Accordingly, it is possible to transmit the data quickly and stably based on the safety level. Further, it is possible to perform data processing efficiently using the microservice.

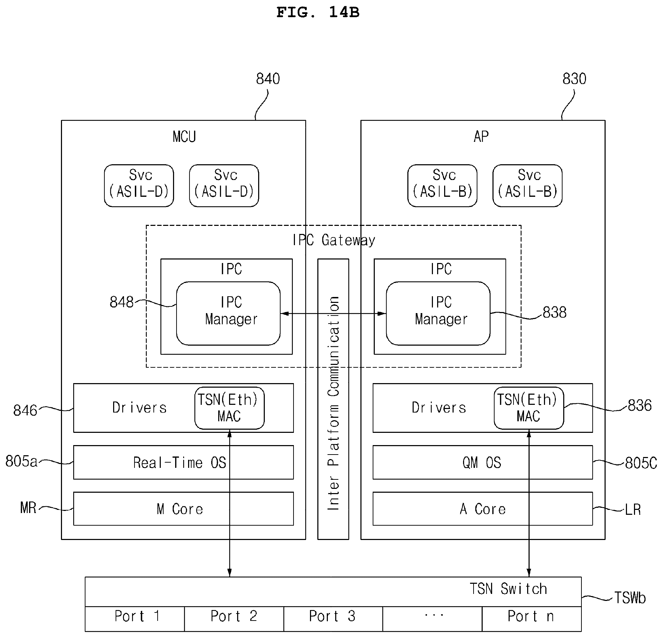

FIG. 14B is a diagram illustrating communication between an M core MR and an application processor core LR in the signal processing device.

Referring to FIG. 14B, the fourth virtual machine 840 executed on the M core MR can be executed on the real time operating system 805a and the driver 846.

Meanwhile, the second virtual machine 850 executed on the application processor core LR can be executed on the operating system 805c corresponding to the third safety level, and the driver 836.

Meanwhile, the respective drivers 836 and 846 can perform Ethernet communication with the external switch TSW.

Meanwhile, the application processor core LR and the M core MR can execute the IPC managers 83 and 848, respectively, to perform IPC communication.

Specifically, the processor 175 including a first type of processor core LR and the second processor 177 including the second type of processor core MR may be configured to transmit or receive data through inter platform communication (IPC). Accordingly, it is possible to transmit the data quickly and stably.

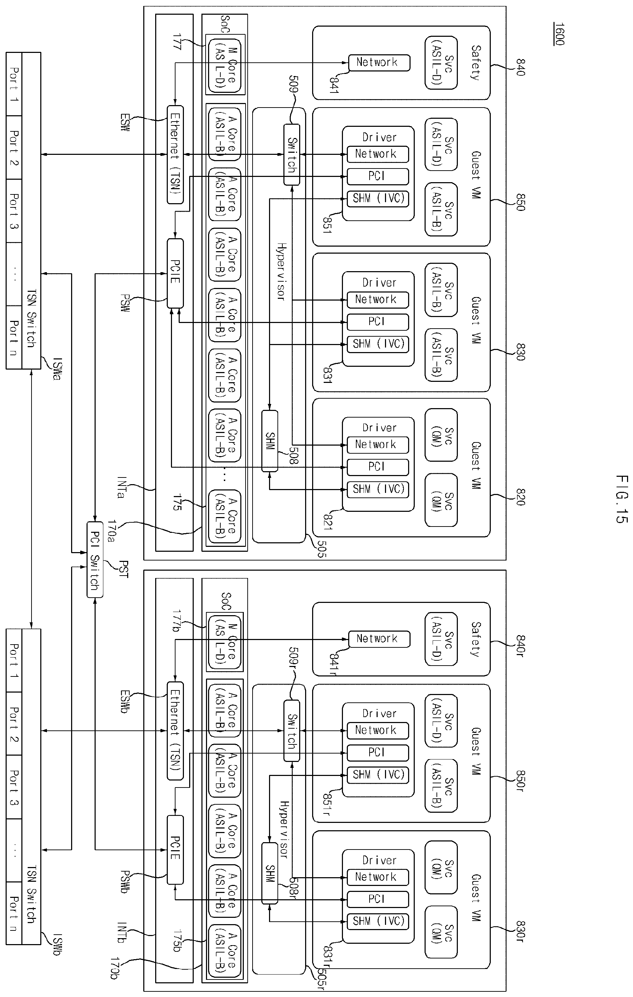

FIG. 15 is a drawing illustrating communication between the first central signal processing device 170a and the second central signal processing device 170b.

Referring to FIG. 15, the first central signal processing device 170a includes the processor 175, the second processor 177, and an interface INTa, and may be configured to execute the plurality of virtual machines 820 to 850.

Among the plurality of virtual machines 820 to 850, the first virtual machine 850 may be configured to execute an application or microservice at ASI D or ASI B, the second virtual machine 830 may be configured to execute an application or microservice at ASI B, the third virtual machine 830 may be configured to execute an application or microservice at QM, and the fourth virtual machine 840 may be configured to execute an application or microservice at ASI D.

Meanwhile, the first central signal processing device 170a may be configured to execute the hypervisor 505 on the processor 175 and execute a plurality of virtual machines 820, 830, and 850 on the hypervisor 505.

Meanwhile, the first central signal processing device 170a may be configured to execute the virtual machine 840 on the second processor 177 without executing a hypervisor.

Meanwhile, the respective virtual machines 820 to 850 can include network interfaces or drivers 821, 831, 841, and 851, and can perform Ethernet communication with an external switch TSWa by using the Ethernet switch ESW in the interface INTa or can perform PCIe communication with an external PCIe switch PST by using the PCIe switch PSW in the interface INTa.

Meanwhile, the second central signal processing device 170b may include a third processor 175b, a fourth processor 177b, and an interface INTb, and may be configured to execute the plurality of virtual machines 830r to 850r.

Meanwhile, the second central signal processing device 170b can include a plurality of processor cores and an interface INTb, and can execute a plurality of virtual machines 830r to 850r on the plurality of processor cores.

Among the plurality of virtual machines 820 to 850, a fifth virtual machine 850r may be configured to execute the application or microservice at ASI D or ASI B, a sixth virtual machine 830r may be configured to execute an application or microservice at QM, and a seventh virtual machine 840r may be configured to execute an application or microservice at ASI D.

Meanwhile, the respective virtual machines 830r to 850r can include network interfaces or drivers 83r1, 841r, and 851r, and can perform Ethernet communication with an external switch TSWb by using the Ethernet switch ESWb in the interface INTb or can perform PCIe communication with an external PCIe switch PST by using the PCIe switch PSWb in the interface INTb.

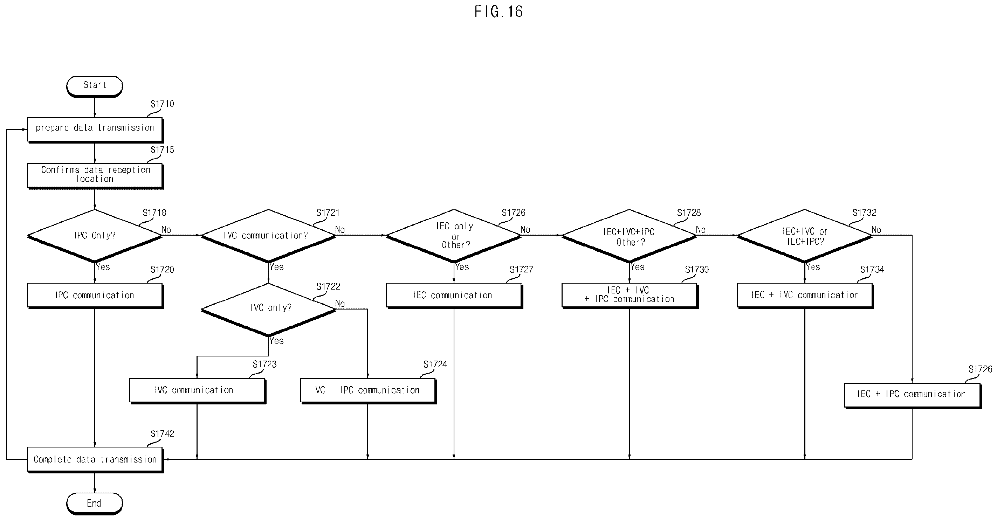

FIG. 16 is a flowchart showing an operation method for the signal processing device according to the embodiment of the present disclosure.

Referring to FIG. 16, the first virtual machine 850 in the processor 175 in the signal processing device 170 prepares data transmission (S1710) and confirms a data reception location (S1715).

Meanwhile, the first virtual machine 850 confirms whether only inter process communication (IPC) is possible (S1718), and performs the IPC communication when the IPC communication is possible (S1720) to complete the data transmission (S1742).

For example, when the data reception location is the same first virtual machine 850 and only IPC communication using the memory 503 in the operating system is possible, the first virtual machine 850 may perform the IPC communication to complete the data transmission.

When only the inter process communication (IPC) is not possible in step 1718 (S1718), the first virtual machine 850 confirms whether inter virtual machine communication (IVC) is possible (S1721), confirms whether only the IVC communication is possible when the IVC communication is possible (S1722), and performs the IVC communication when the IVC communication is possible (S1723) to complete the data transmission.

For example, when the data reception location is the second virtual machine 830 in the signal processing device 170 and only IVC communication using the unique memory 508 in the hypervisor 505 is possible, the first virtual machine 850 may perform the IVC communication to complete the data transmission.

Meanwhile, when the IVC communication is not possible in step 1722 (S1722), the first virtual machine 850 performs communication through at least one of heterogeneous IVC and IPC communications (S1724) to complete the data transmission.

For example, when the data reception location is the first virtual machine 850 in the signal processing device 170 and the IVC communication and the IPC communication are possible, the first virtual machine 850 may perform communication based on at least one of the heterogeneous IVC and IPC communications to complete the data transmission.

Meanwhile, when the IVC communication is not possible in step 1721 (S1721), the first virtual machine 850 may determine whether only inter ECU communication (IEC) is possible (S1726), and perform the IEC communication when the IEC communication is possible, to complete the data transmission.

For example, the first virtual machine 850 in the signal processing device 170 may perform IEC communication with a virtual machine in the second signal processing device 170b to complete the data transmission.

Meanwhile, when the IEC communication is not possible in step 1726 (S1726), the first virtual machine 850 may determine whether the IEC communication, the IVC communication, and the IPC communication are possible (S1728), and complete the data transmission through one of the IEC communication, the IVC communication, and the IPC communication (S1730).

Meanwhile, when the IEC communication, the IVC communication, and the IPC communication are not possible in step 1728 (S1728), the first virtual machine 850 may determine whether only the IEC communication and the IVC communication are possible (S1732), and complete the data transmission through one of the IEC communication and the IVC communication (S1734).

Meanwhile, when the IEC communication and the IVC communication are not possible in step 1732 (S1732), the first virtual machine 850 may determine that only the IEC communication and the IPC communication are possible, and complete the data transmission through one of the IEC communication and the IPC communication (S1726).

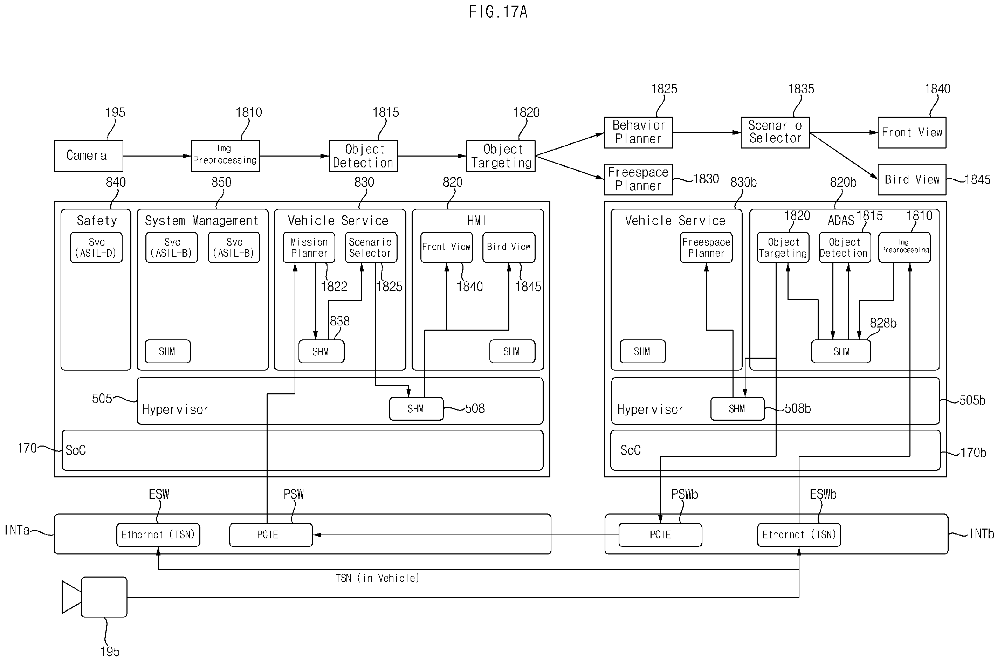

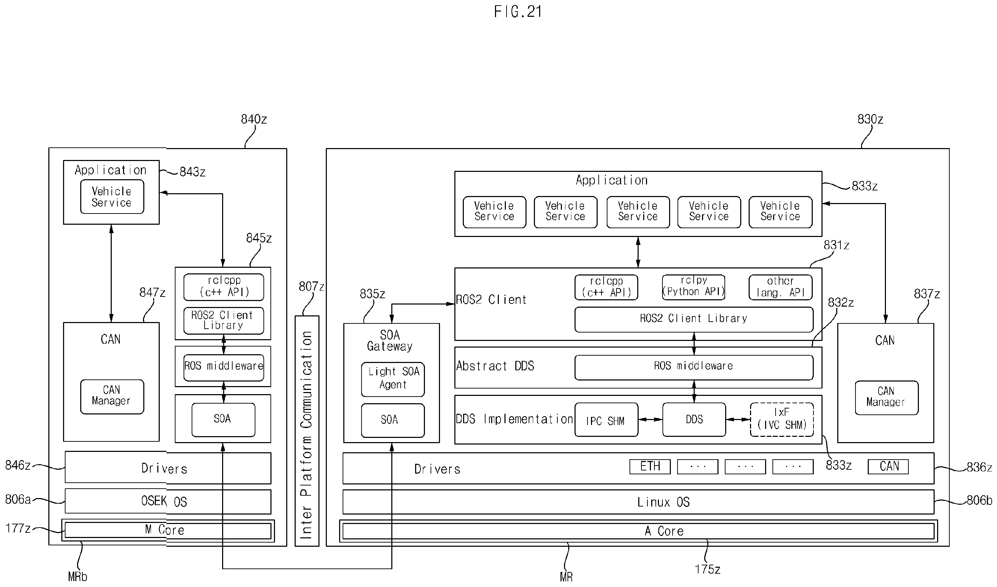

FIGS. 17A to 24 are diagrams referenced in the description of the operation of FIG. 16.

FIG. 17A is a diagram illustrating an example of camera data transmission.

Referring to the drawing, the camera data from the camera 175 may be transmitted to a virtual machine 820b executing an ADAS application executed on the hypervisor 505b within the second signal processing device 170b via the Ethernet switch ESWb in the interface INTb in the second signal processing device 170b.

The ADAS application within the virtual machine 820b may sequentially perform an image processing microservice 1810, an object detection microservice 1815, and an object tracking microservice 1820.

Meanwhile, the ADAS application within the virtual machine 820b may correspond to ASIL D.

In this case, result data of the image processing microservice 1810 may be stored in the shared memory 828b, and the object detection microservice 1815 may be executed based on the result data of the image processing microservice 1810.

Meanwhile, result data of the object detection microservice 1815 may be stored in the shared memory 828b, and the object tracking microservice 1820 may be executed based on the result data of the object detection microservice 1815.

Meanwhile, result data of the object tracking microservice 1820 may be stored in a shared memory 508b within a hypervisor 508b.

Meanwhile, the virtual machine 830b executed on the hypervisor 505b in the second signal processing device 170b may be configured to execute a vehicle service application.

Meanwhile, the freespace planner microservice within the vehicle service application may be executed based on the result data of the object tracking microservice 1820.

Meanwhile, the freespace planner microservice within the virtual machine 830b may correspond to ASIL B.

Meanwhile, the result data of the object tracking microservice 1820 may be transmitted to the virtual machine 830 executed on the hypervisor 505 in the signal processing device 170 via the PCIe switch PSWb in the interface INTb and the PCIe switch PSW in the interface INT in the signal processing device 170.

In particular, the result data of the object tracking microservice 1820 may be transmitted to a mission planner microservice 1822 within the virtual machine 830.

Meanwhile, result data of the mission planner microservice 1822 may be stored in the shared memory 838, and a scenario selector microservice 1825 may be executed based on the result data of the mission planner microservice 1822.

Meanwhile, result data of the scenario selector microservice 1825 may be stored in the shared memory 508 in the hypervisor 505.

Meanwhile, the result data of the scenario selector microservice 1825 may be transmitted to another virtual machine 820 executed on the hypervisor 505 in the signal processing device 170.

In particular, the result data of the scenario selector microservice 1825 may be transmitted to a front view microservice 1840 and a bird view microservice 1845 within the virtual machine 820 corresponding to the QM.

Meanwhile, the front view microservice 1840 and the bird view microservice 1845 may output a front view image and a bird view image, respectively.

Meanwhile, the signal processing device 170 may further execute the virtual machine 850 corresponding to a system management executed on the hypervisor 505.

Meanwhile, the signal processing device 170 may further execute a safety-related virtual machine 840 corresponding to ASID D without executing the hypervisor 505.

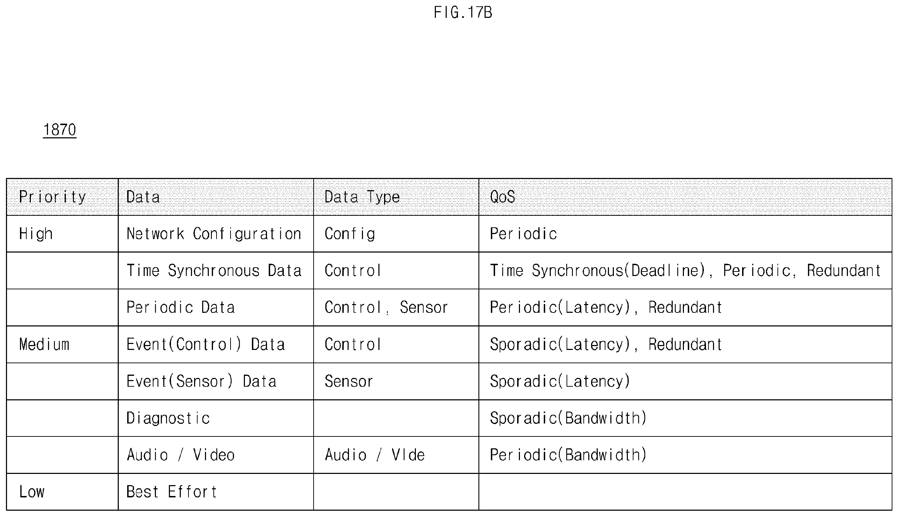

FIG. 17B is a diagram illustrating a priority of data transmission.

Referring to FIG. 17B, data transmission priority of network configuration data, time synchronous data, and periodic data may be high.

Meanwhile, data transmission priority of event (control) data, event (sensor) data, diagnostic data, audio data, and video data may be medium.

Meanwhile, data transmission priority of best effort data may be Low.

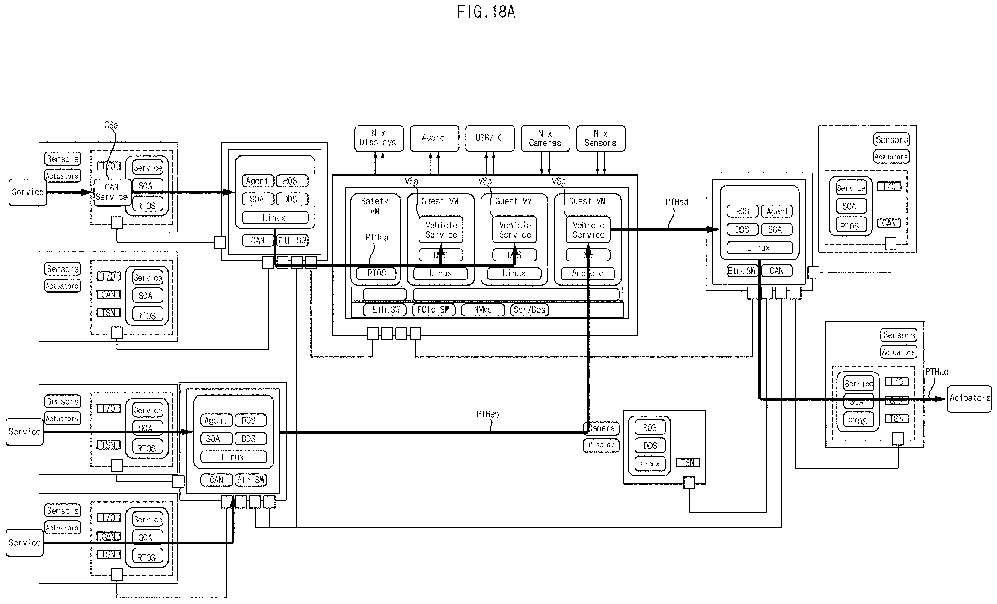

FIGS. 18A to 18E are diagrams illustrating various examples of data transmission flows.

Referring to the drawings, FIG. 18A illustrates transmission of periodic sensor data.

Meanwhile, a vehicle display apparatus 1300b according to the embodiment of the present disclosure in FIG. 18A may be the same as that in FIG. 9.

Meanwhile, CAN data from a first basic device BUa may be input to a first zonal signal processing device 170z1 and converted into an Ethernet signal. The converted Ethernet signal may be transmitted to some virtual machines VSA and VSb among virtual machines VSA, VSb, and VSc in a signal processing device 170 through an Ethernet switch ESW.

Meanwhile, data from a fourth base device BUd and data from a fifth base device BUe may be transmitted to the virtual machine VSc in the signal processing device 170 via a second zonal signal processing device 170z2 and the Ethernet switch ESW.

Meanwhile, the virtual machine VSc may be configured to transmit the input data to a sixth base device BUf through a third zonal signal processing device 170z3.

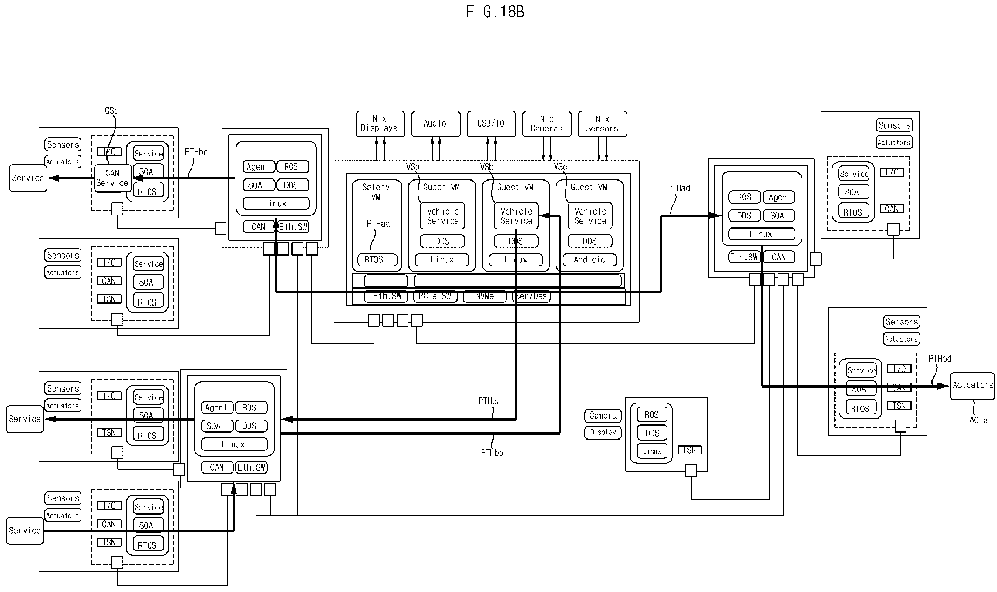

FIG. 18B illustrates transmission of the time synchronous control data.

Referring to FIG. 18B, the data from the fifth basic device BUe may be transmitted to the virtual machine VSb in the signal processing device 170 via the second zonal signal processing device 170z2 and the Ethernet switch ESW.

Meanwhile, the virtual machine VSb may be configured to transmit data to the fourth basic device BUd via the second zonal signal processing device 170z2.

Meanwhile, the virtual machine VSb may be configured to transmit data to the first basic device BUa via the first zonal signal processing device 170z1.

Meanwhile, the virtual machine VSb may be configured to transmit data to a sixth basic device BUf via the third zonal signal processing device 170z3.

FIG. 18B illustrates transmission of camera data.

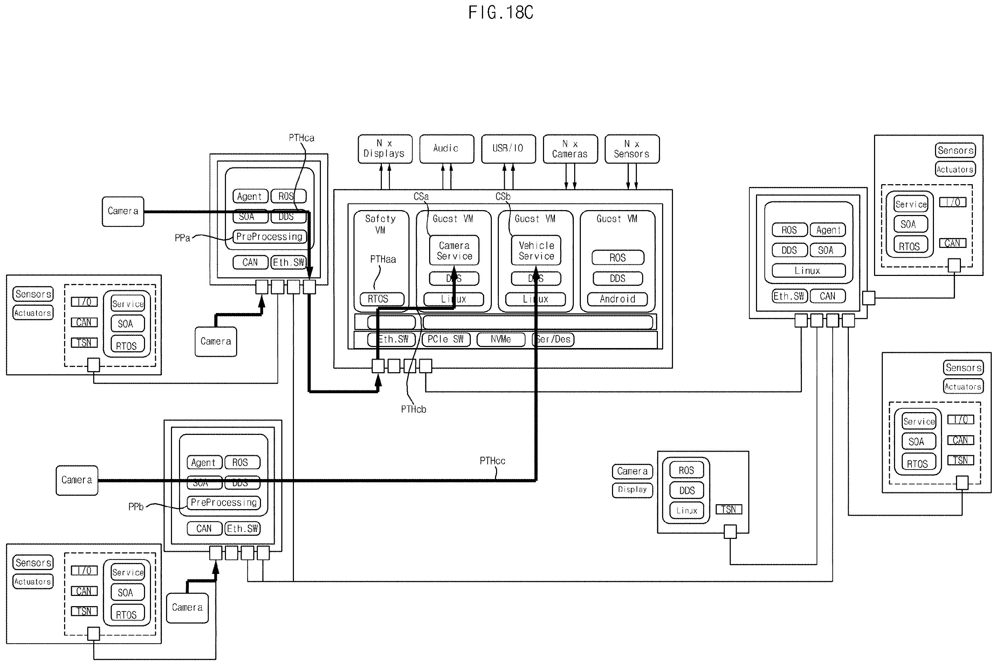

Referring to FIG. 18C, first camera data may be transmitted to a virtual machine VSa in the signal processing device 170 via the first zonal signal processing device 170z1 and the Ethernet switch ESW.

Second camera data may be transmitted to the virtual machine VSb in the signal processing device 170 via the second zonal signal processing device 170z2 and the Ethernet switch ESW.

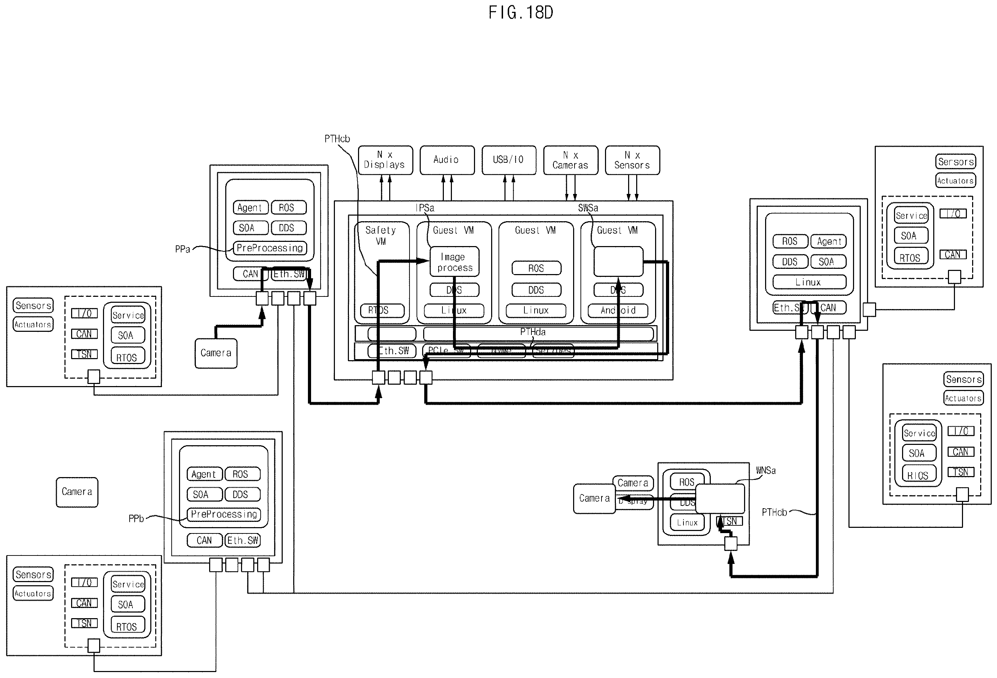

FIG. 18D illustrates transmission of camera data subjected to signal processing.

Referring to FIG. 18D, the first camera data may be transmitted to the virtual machine VSa in the signal processing device 170 via the first zonal signal processing device 170z1 and the Ethernet switch ESW.

An image processor microservice ISPa within the virtual machine VSa may be configured to transmit data subjected to image processing to a screen sharing microservice SWSa within another virtual machine VSc.

Meanwhile, result data from the screen sharing microservice SWSa within the virtual machine VSc may be input to the network display device NDC via the third zonal signal processing device 170z3.

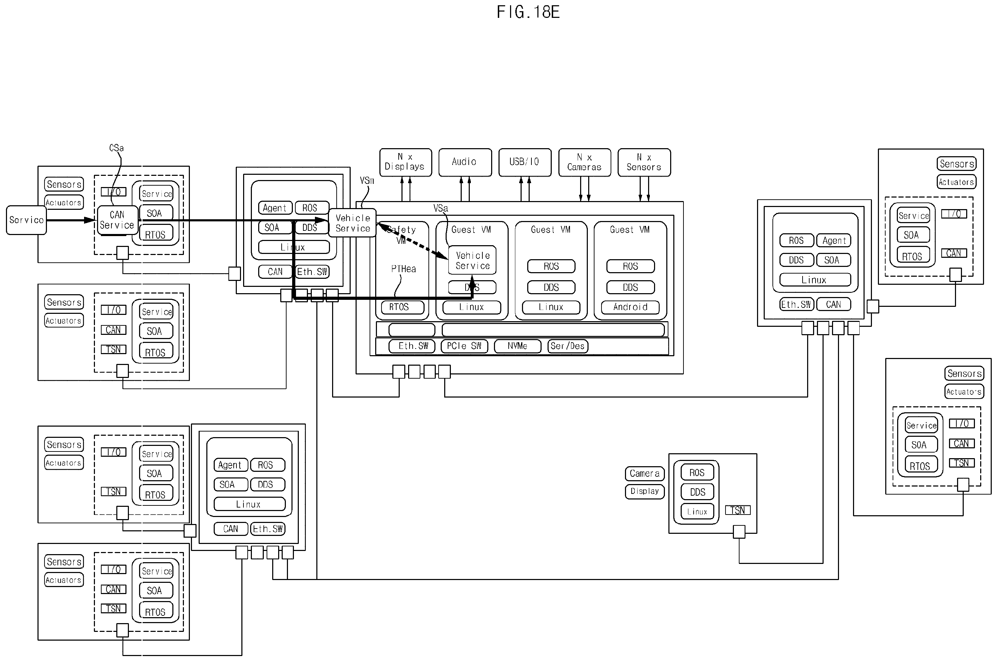

FIG. 18E is a diagram illustrating service orchestration.

Referring to FIG. 18E, the first camera data may be input to the first zonal signal processing device 170z1, and may be transmitted to the virtual machine VSa in the signal processing device 170 via the Ethernet switch ESW when a service location is changed.

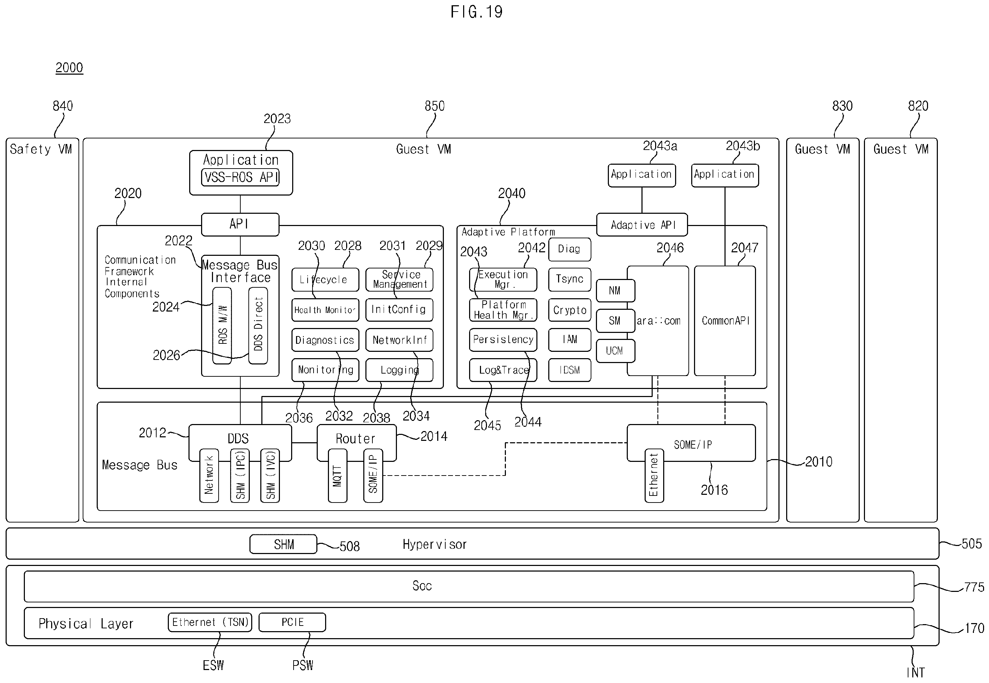

FIG. 19 is a diagram illustrating a communication structure of the signal processing device.

Referring to FIG. 19, the signal processing device 170 may include the interface INT and the processor 175.

A plurality of virtual machines 820, 830, 840, and 850 may be executed on the hypervisor 505 on the processor 175.

Meanwhile, the first virtual machine 850 may be configured to execute a message bus 2010 and execute a communication framework 2020 and an adaptive platform 2040 on the message bus 2010.

The message bus 2010 may perform network communication, IPC-based shared memory communication, and IVC-based shared memory communication through a DDS 2012.

Meanwhile, the message bus 2010 may perform network communication, MQTT communication, and SOME/IP communication through a router 2014.

Meanwhile, the message bus 2010 may perform Ethernet communication through a SOME/IP interface 2016.

Meanwhile, the communication framework 2020 may exchange data with the DDS 2012 through a message bus interface 2022.

Meanwhile, the communication framework 2020 may be configured to execute lifecycle 2028, service management 2029, Health Monitor 2030, IntiConfig 2031, Diagnostics 2032, NetworkInf 2034, Monitoring 2036, and Logging 2038.

Meanwhile, the communication framework 2020 may exchange data with a first application 2023 through an API.

Meanwhile, the adaptive platform 2040 may exchange interfaces with the SOME/IP interface 2016 through a first interface 2046 and a second interface 2047.

Meanwhile, the adaptive platform 2040 may exchange data with a second application 2043a through an adaptive API, and may exchange data with a third application 2043b through the second interface 2047.

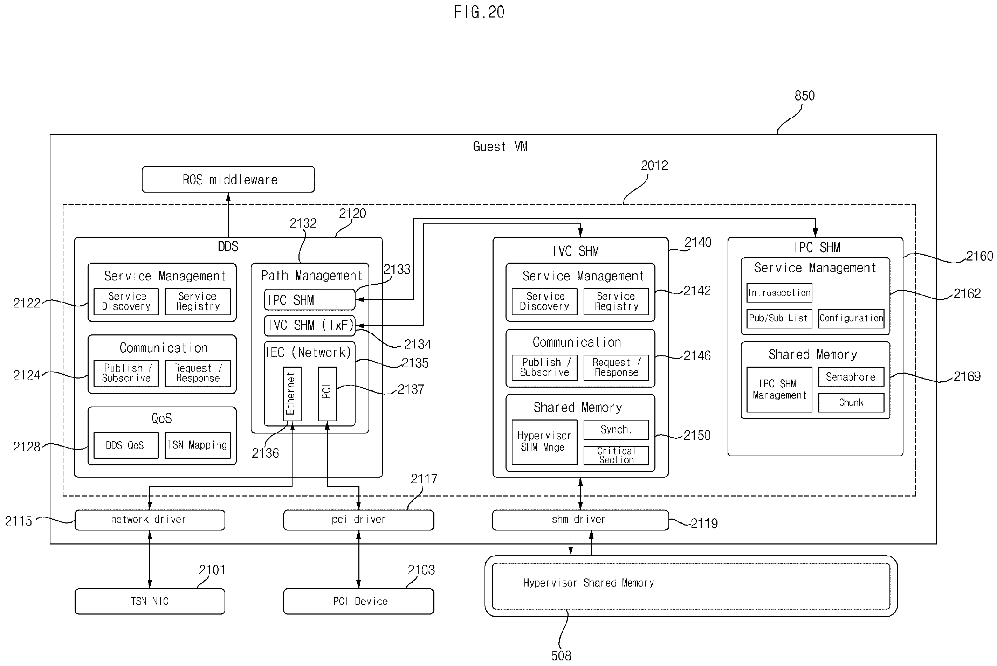

FIG. 20 is a diagram illustrating communication using the shared memory in the hypervisor.

Referring to FIG. 20, the first virtual machine 850 executed in the signal processing device 170 may be configured to execute a DDS 2120, an IVC SHM interface 2140, and an IPC SHM interface 2160.

A driver 2119 between the shared memory 508 and the IVC SHM interface 2140 may perform bidirectional communication.

For example, the driver 2119 may be configured to transmit data from the shared memory 508 to the IVC SHM interface 2140.

Meanwhile, a bus management 2142 in the IVC SHM interface 2140 may activate a DDS feature.

Meanwhile, the bus management 2142 in the IVC SHM interface 2140 may be configured to transmit data to a path management 2132 in the DDS 2120.

The path management 2132 may include an IPC interface 2133, an IVC interface 2134, and an IEC interface 2135.

Meanwhile, the IEC interface 2135 may include an Ethernet interface 2136 and a PCIe interface 2137.

Meanwhile, the path management 2132 may be configured to transmit data to an external network interface card 2101 via the Ethernet interface 2136 and a driver 2115. Accordingly, Ethernet communication may be performed.

Meanwhile, the path management 2132 may be configured to transmit data to an external PCIe device 2103 via the PCIe interface 2137 and a driver 2117. Accordingly, PCIe communication may be performed.

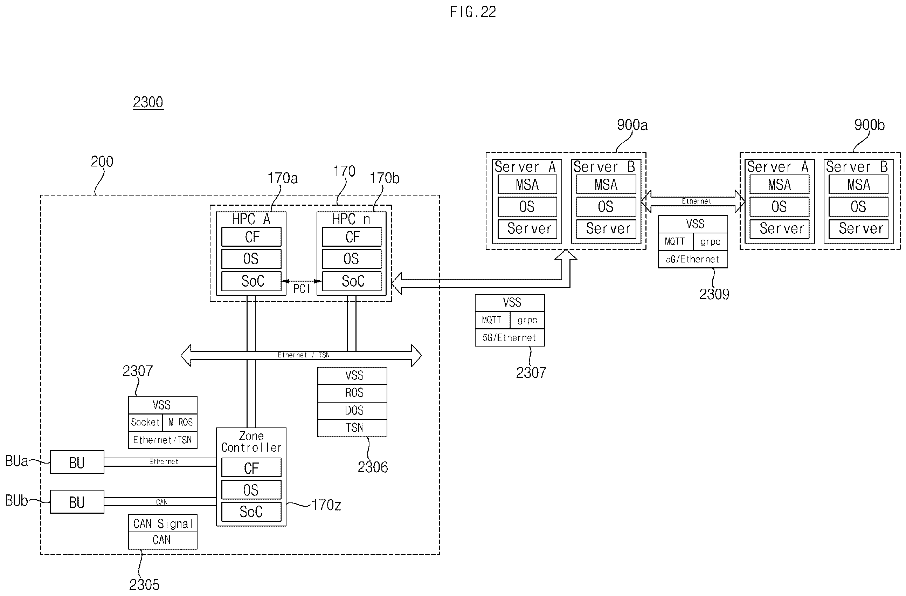

FIG. 22 is a diagram illustrating data transmission between a vehicle and a server or cloud.

Referring to FIG. 22, an Ethernet signal from the first basic device BUa or a CAN signal from the second basic device BUb may be input to the zonal signal processing device 170z.

The zonal signal processing device 170z may be configured to convert the CAN signal into an Ethernet signal.

Meanwhile, the Ethernet signal from the zonal signal processing device 170z may be transmitted to the first central signal processing device 170a.

The first central signal processing device 170a may be configured to transmit data to the second central signal processing device 170b through the PCIe communication.

The second central signal processing device 170b may be configured to transmit data to an external server 900a through wireless mobile communication, Ethernet communication, or the like via the communication unit 120.

Meanwhile, the external server 900a may be configured to transmit data to an external cloud 900b through the Ethernet communication or the like.

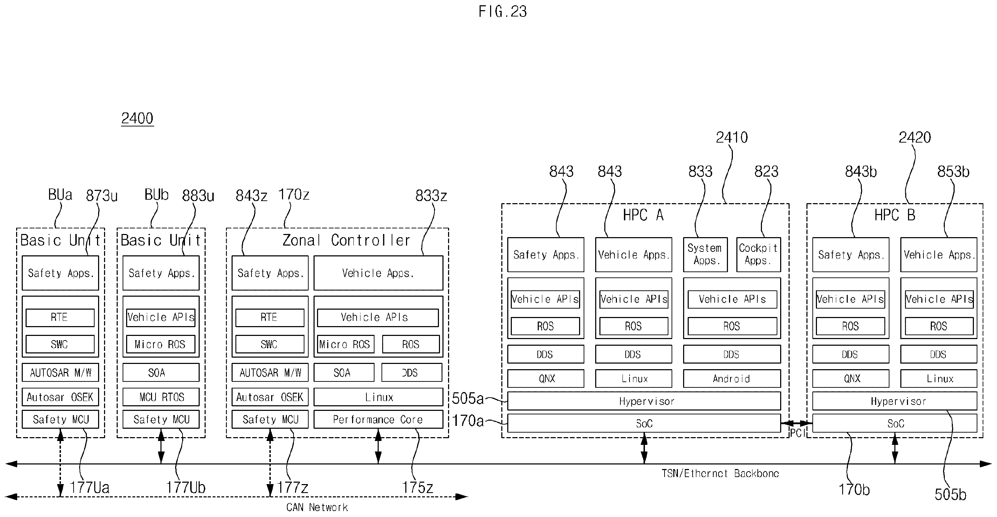

FIG. 23 illustrates an example of a communication interface of the vehicle display apparatus.

Referring to FIG. 23, the first basic device BUa and the zonal signal processing device 170z may perform the CAN communication through respective M cores or MCUs.

Meanwhile, the second basic device BUb, the zonal signal processing device 170z, the first central signal processing device 170a, and the second central signal processing device 170b may perform Ethernet communication through respective cores or processors.

Meanwhile, the first central signal processing device 170a and the second central signal processing device 170b may perform PCIe communication.

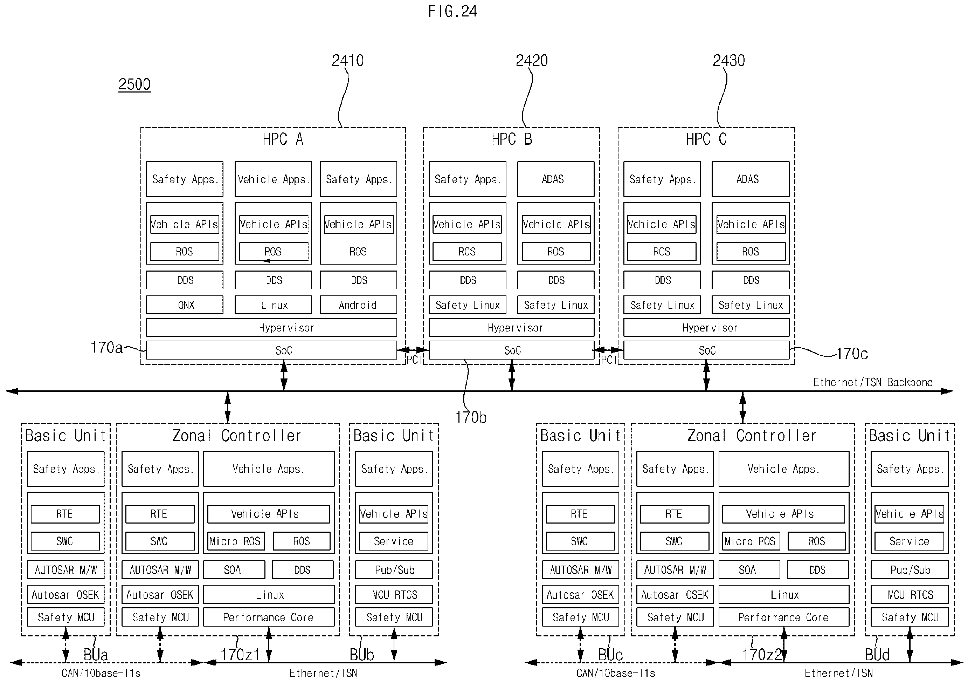

FIG. 24 illustrates another example of the communication interface of the vehicle display apparatus.

Referring to FIG. 24, the first basic device BUa and the zonal signal processing device 170z may perform CAN communication through the respective M cores or MCUs.

Meanwhile, the second basic device BUb and the first zonal signal processing device 170z1 may perform Ethernet communication through respective cores or processors.

Meanwhile, the third basic device BUc and the second zonal signal processing device 170z2 may perform CAN communication through respective M cores or MCUs.

Meanwhile, the fourth basic device BUd and the second zonal signal processing device 170z2 may perform Ethernet communication through respective cores or processors.

Meanwhile, the first zonal signal processing device 170z1, the second zonal signal processing device 170z2, the first central signal processing device 170a, the second central signal processing device 170b, and the third central signal processing device 170c may perform Ethernet communication through respective cores or processors.

Meanwhile, the first central signal processing device 170a and the second central signal processing device 170b may perform PCIe communication.

Meanwhile, the second central signal processing device 170b and the third central signal processing device 170c may perform the PCIe communication.

Although the preferred embodiments of the present disclosure have been illustrated and described above, the present disclosure is not limited to the specific embodiments described above, and it is obvious that various modifications can be made by those skilled in the art without departing from the gist of the present disclosure claimed in the claims, and such modifications should not be individually understood from the technical spirit or prospect of the present disclosure.

## Claims

1. A signal processing device comprising:
a processor including a plurality of processor cores,
wherein the processor is configured to execute a plurality of virtual machines on a hypervisor, and
wherein a first virtual machine among the plurality of virtual machines is configured to transmit first data to a second virtual machine based on one of heterogeneous data communication schemes, and transmit second data to an external signal processing device based on one of the heterogeneous data communication schemes.

2. The signal processing device of claim 1, wherein one of communication schemes from the first virtual machine to the second virtual machine is the same as one of communication schemes from the first virtual machine to the external signal processing device.

3. The signal processing device of claim 1, further comprising:
an Ethernet switch for Ethernet communication; and
a second switch for peripheral component interconnect express communication,
wherein the first virtual machine is configured to transmit the second data to the external signal processing device through the Ethernet communication or the peripheral component interconnect express communication.

4. The signal processing device of claim 1, wherein
the processor is configured to execute an operating system on the hypervisor, and
a service provider in the first virtual machine is configured to transmit the first data to a service subscriber within the first virtual machine through a shared memory in the operating system.

5. The signal processing device of claim 3, wherein the first virtual machine is configured to transmit the second data to a second signal processing device or a zonal signal processing device through the Ethernet communication or the peripheral component interconnect express communication.

6. The signal processing device of claim 5, wherein
the zonal signal processing device is configured to convert sensor data received through CAN communication into an Ethernet signal and transmit the Ethernet signal, and
the first virtual machine is configured to receive the sensor data converted into the Ethernet signal through the Ethernet communication.

7. The signal processing device of claim 1, wherein the processor is configured to transmit a video signal to a display based on one of heterogeneous data communication schemes.

8. The signal processing device of claim 7, wherein the processor is configured to transmit the video signal to the display based on a low voltage differential signaling (LVDS) scheme or a Serdes scheme.

9. The signal processing device of claim 1, further comprising:
a second processor including a plurality of processor cores of a first type and a processor core of a second type different from the first type, wherein
the processor is configured to transmit third data to the second processor through inter platform communication (IPC).

10. The signal processing device of claim 9, wherein
the first virtual machine is configured to execute a first application with a first safety level or a second safety level higher than the first safety level or a microservice corresponding to the first application, and
the second processor is configured to execute a second application with the second safety level or a microservice corresponding to the second application.

11. The signal processing device of claim 1, wherein
the first virtual machine is configured to execute a first application with a first safety level or a second safety level higher than the first safety level or a microservice corresponding to the first application, and
the second virtual machine is configured to execute an application or microservice with the second safety level.

12. The signal processing device of claim 1, wherein the first virtual machine is configured to :
receive result data of a microservice from an external zonal signal processing device through Ethernet communication, and
transmit the received result data to the second virtual machine with the same or lower safety level.

13. The signal processing device of claim 1, wherein the processor is configured to receive periodic sensor data or camera data from an external zonal signal processing device through Ethernet communication.

14. The signal processing device of claim 1, wherein the processor is configured to transmit time synchronous control data to an external zonal signal processing device.

15. The signal processing device of claim 1, wherein the first virtual machine is configured to process camera data received through Ethernet communication and transmit the processed data to the second virtual machine based on one of the heterogeneous data communication schemes.

16. The signal processing device of claim 1, wherein the processor is configured to transmit an audio signal based on an automotive audio bus to an audio output device.

17. The signal processing device of claim 1, wherein
the first virtual machine is configured to :
transmit the first data to the second virtual machine with the same or lower safety level, and
transmit the second data to the external signal processing device with the same or lower safety level.

18. A signal processing device comprising:
a processor including a plurality of processor cores, wherein
the processor is configured to execute a plurality of virtual machines on a hypervisor, and
a first virtual machine among the plurality of virtual machines is configured to :
transmit first data to a second virtual machine through Ethernet communication or a shared memory within the hypervisor, and
transmit second data to an external signal processing device through the Ethernet communication or peripheral component interconnect express communication.

19. A vehicle display apparatus comprising:
at least one display; and
a signal processing device configured to output a video signal to the display,
wherein the signal processing device includes the signal processing device of claims 1 to 18.
